# EUROPEAN PATENT APPLICATION

(11) **EP 4 821 958 A1**
(43) Date of publication of application: **14.10.2026**
(21) Application number: 25892242.6
(22) Date of filing: 10.07.2025
(51) Int. Cl.: C08F 4/659, C08F 4/6592, C08F 210/16

(54) **HYBRID SUPPORTED METALLOCENE CATALYST AND METHOD FOR PREPARING POLYETHYLENE USING SAME**

(30) Priority: 12.11.2024 KR 20240160187; 04.07.2025 KR 20250090265
(71) Applicant: LG Chem, Ltd., Seoul 07336 (KR)
(72) Inventor: KIM, Byung Seok, Daejeon 34122 (KR); HAN, Chang Woan, Daejeon 34122 (KR); LIM, Eunjung, Daejeon 34122 (KR); GWON, Donghyeon, Daejeon 34122 (KR); JUNG, Yoonchul, Daejeon 34122 (KR); LEE, Chaeeun, Daejeon 34122 (KR); KIM, Seyoung, Daejeon 34122 (KR)
(74) Representative: Hoffmann Eitle
(86) International application number: PCT/KR2025/010071
(87) International publication number: WO 2026/106019

(57) **Abstract**

The present invention relates to a hybrid supported metallocene catalyst useful for preparing a polyethylene exhibiting high impact strength characteristics along with excellent processability, and a method for preparing a polyethylene using the same.

## Description

### [Technical Field]

The present invention relates to a hybrid supported metallocene catalyst useful for the manufacturing of a polyethylene exhibiting high impact strength characteristics along with excellent processability, and a method for preparing a polyethylene using the same.

### Cross-Reference to Related Applications

This application claims the benefit of priority based on Korean Patent Application No. 10-2024-0160187, filed on November 12, 2024, and Korean Patent Application No. 10-2025-0090265, filed on July 4, 2025, and all contents disclosed in the documents of said Korean patent applications are incorporated as part of the present specification.

### [Background Art]

Olefin polymerization catalyst systems can be classified into Ziegler-Natta and metallocene catalyst systems, and these two high-activity catalyst systems have been developed according to their respective characteristics. Ziegler-Natta catalysts have been widely applied to existing commercial processes since their invention in the 1950s. However, since they are multi-site catalysts with multiple coexisting active sites, they have a feature that a resulting polymer has a broad molecular weight distribution, and the uneven composition distribution of the comonomer leads to limitations in securing desired physical properties.

On the other hand, metallocene catalysts include a combination of a main catalyst having a transition metal compound as a main component and an organometallic compound cocatalyst having aluminum as a main component. Such a catalyst is a single-site catalyst which is a homogeneous complex catalyst, and produces a polymer with a narrow molecular weight distribution and a uniform compositional distribution of comonomers, due to the single site characteristics. The stereoregularity, copolymerization characteristics, molecular weight, crystallinity, etc. of the resulting polymer may be controlled by changing a ligand structure of the catalyst and polymerization conditions.

Meanwhile, linear low density polyethylene (LLDPE) is produced by copolymerizing ethylene and alpha-olefin at low pressure using a polymerizing catalyst, and is a resin with a narrow molecular weight distribution, short chain branches of a certain length, and no long chain branches. The linear low density polyethylene film has high tensile strength at break and elongation, and excellent tear strength, dart drop impact strength, etc., in addition to the characteristics of general polyethylene, so its use is increasing in stretch films, overlap films, etc., where the application of existing low density polyethylene or high density polyethylene is difficult.

Recently, with the trend toward decarbonization, there has been a growing demand for high-performance linear low density polyethylene (LLDPE) with improved recyclability. Alongside this, there is also an increasing need for linear low-density polyethylene having excellent dart drop impact strength and processability, as well as high transparency.

The dart drop impact strength is a very important mechanical property that confirms the various impact resistances of a resin.

However, the linear low density polyethylene, despite its excellent mechanical properties, has drawbacks such as poor blown film processability and low transparency. A blown film refers to a type of film manufactured by inflating molten plastic with air, and is also referred to as an inflation film.

The lower the density, the better the transparency and the higher the dart drop impact strength. However, when a large amount of alpha-olefin comonomer is used to produce low-density polyethylene, issues such as increased fouling in the slurry polymerization process can arise. As a result, in slurry polymerization processes, products with a density of 0.915 g/cm³ or higher are predominantly produced.

When long-chain branches are introduced into LLDPE with a density of 0.915 g/cm³ or higher, it is possible to achieve enhanced processability while maintaining excellent mechanical properties and simultaneously realizing high transparency, and high-value products such as shrink films can be expected with these properties.

In addition, the linear low density polyethylene generally uses a comonomer with 6 or more carbon atoms, such as 1-hexene or 1-octene, to achieve the above-described properties, but the comonomer with 6 or more carbon atoms is relatively expensive due to its complex production process.

Accordingly, there is a need for a catalyst that can manufacture a polyethylene having physical properties similar to LLDPE manufactured using a conventional comonomer with 6 or more carbon atoms, even when using a relatively inexpensive comonomer with a low number of carbon atoms.

### [Detailed Description of the Invention]

### [Technical Problem]

There is provided a hybrid supported metallocene catalyst useful for preparing a polyethylene exhibiting high impact strength characteristics along with excellent processability.

In addition, there is provided a method for preparing a polyethylene exhibiting excellent dart drop impact strength by using the hybrid supported metallocene catalyst.

### [Technical Solution]

In the present invention, there is provided a hybrid supported metallocene catalyst, including a first transition metal compound represented by the following Chemical Formula 1 or Chemical Formula 2; a second transition metal compound represented by the following Chemical Formula 3; a cocatalyst; and a support: 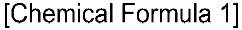 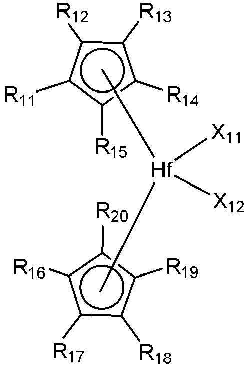 in Chemical Formula 1,
X₁₁ and X₁₂ are each independently C₁₋₂₀ alkyl, or halogen,
R₁₁ to R₁₅ are each independently hydrogen, C₁₋₂₀ alkyl, C₂₋₂₀ alkoxyalkyl, C₆₋₂₀ aryl, C₇₋₂₀ alkylaryl, or C₇₋₂₀ arylalkyl, or two adjacent substituents among R₁₁ to R₁₅ are linked to each other to form a C₆₋₂₀ aromatic ring which is substituted or unsubstituted, and
R₁₆ to R₂₀ are each independently hydrogen, C₁₋₂₀ alkyl, or C₂₋₂₀ alkoxyalkyl, 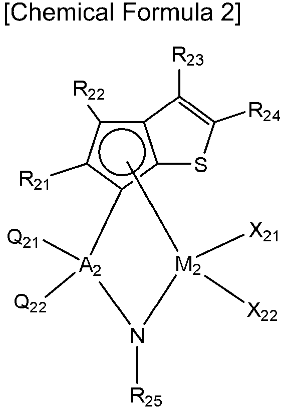 in Chemical Formula 2,
   M₂ is a group 4 transition metal,
   X₂₁ and X₂₂ are each independently, C₁₋₂₀ alkyl, or halogen,
   A₂ is carbon, silicon, or germanium,
   Q₂₁ and Q₂₂ are each independently, halogen, C₁₋₂₀ alkyl, or C₂₋₂₀ alkoxyalkyl, provided that at least one of Q₂₁ and Q₂₂ is C₂₋₂₀ alkoxyalkyl,
   R₂₁ and R₂₂ are each independently, hydrogen or C₁₋₂₀ alkyl,
   R₂₃ and R₂₄ are each independently, hydrogen, or C₁₋₂₀ alkyl, or are linked to each other to form a C₆₋₂₀ aromatic ring which is substituted or unsubstituted, and
   R₂₅ is C₁₋₂₀ alkyl, 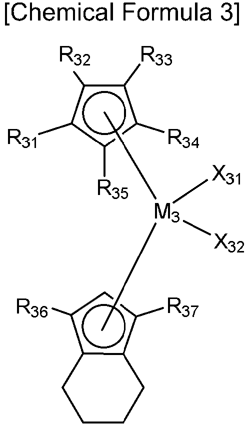 in Chemical Formula 3,
      M₃ is a group 4 transition metal,
      X₃₁ and X₃₂ are each independently, C₁₋₂₀ alkyl or halogen,
      R₃₁ to R₃₅ are each independently, hydrogen, or C₁₋₂₀ alkyl, provided that at least four of R₃₁ to R₃₅ are C₁₋₂₀ alkyl, and
      R₃₆ and R₃₇ are each independently, hydrogen, C₁₋₂₀ alkyl which is unsubstituted or substituted with one or more halogens, or C₂₋₂₀ alkoxyalkyl, provided that at least one of R₃₆ and R₃₇ is C₁₋₂₀ alkyl substituted with one or more halogens, or C₂₋₂₀ alkoxyalkyl.

In addition, there is provided a method for preparing a polyethylene, including a step of slurry polymerization of an ethylene monomer and an olefin monomer while introducing hydrogen, in the presence of the hybrid supported metallocene catalyst described above.

In the present invention, terms such as first, second, etc., are used to describe various components, and these terms are used only for the purpose of distinguishing one component from another.

In addition, the terms used in this specification are used only to describe illustrative embodiments and are not intended to limit the present invention. A singular expression includes a plural expression unless the context clearly indicates otherwise. In this specification, terms such as "comprise," "be equipped with," or "have" are intended to designate the presence of the implemented feature, number, step, component, or a combination thereof, and should be understood as not precluding the possibility of the presence or addition of one or more other features, numbers, steps, components, or combinations thereof.

Also, in the present specification, "~" representing a numerical range includes both the upper and lower limits of the numerical range. For example, A~B means A or more and B or less.

The present invention can be modified in various ways and can have various forms, and specific embodiments will be illustrated and described in detail below. However, this is not intended to limit the present invention to a specific disclosed form, and it should be understood to include all modifications, equivalents, or substitutes included in the spirit and technical scope of the present invention.

Hereinafter, the hybrid supported metallocene catalyst and the method for preparing a polyethylene using the same of the present invention will be described in detail.

The hybrid supported metallocene catalyst according to the present invention includes: a first transition metal compound represented by the following Chemical Formula 1 or Chemical Formula 2; a second transition metal compound represented by the following Chemical Formula 3; a cocatalyst; and a support: 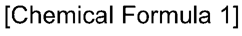 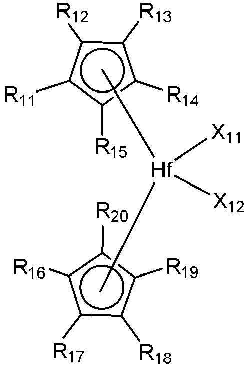 in Chemical Formula 1,
X₁₁ and X₁₂ are each independently C₁₋₂₀ alkyl, or halogen,
R₁₁ to R₁₅ are each independently hydrogen, C₁₋₂₀ alkyl, C₂₋₂₀ alkoxyalkyl, C₆₋₂₀ aryl, C₇₋₂₀ alkylaryl, or C₇₋₂₀ arylalkyl, or two adjacent substituents among R₁₁ to R₁₅ are linked to each other to form a C₆₋₂₀ aromatic ring which is substituted or unsubstituted, and
R₁₆ to R₂₀ are each independently hydrogen, C₁₋₂₀ alkyl, or C₂₋₂₀ alkoxyalkyl, 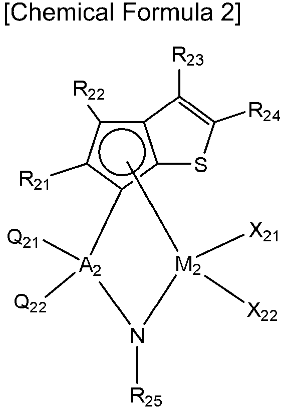 in Chemical Formula 2,
   M₂ is a group 4 transition metal,
   X₂₁ and X₂₂ are each independently, C₁₋₂₀ alkyl, or halogen,
   A₂ is carbon, silicon, or germanium,
   Q₂₁ and Q₂₂ are each independently, halogen, C₁₋₂₀ alkyl, or C₂₋₂₀ alkoxyalkyl, provided that at least one of Q₂₁ and Q₂₂ is C₂₋₂₀ alkoxyalkyl,
   R₂₁ and R₂₂ are each independently, hydrogen or C₁₋₂₀ alkyl,
   R₂₃ and R₂₄ are each independently, hydrogen, or C₁₋₂₀ alkyl, or are linked to each other to form a C₆₋₂₀ aromatic ring which is substituted or unsubstituted, and
   R₂₅ is C₁₋₂₀ alkyl, 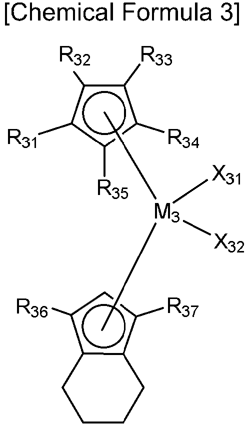 in Chemical Formula 3,
      M₃ is a group 4 transition metal,
      X₃₁ and X₃₂ are each independently, C₁₋₂₀ alkyl or halogen,
      R₃₁ to R₃₅ are each independently, hydrogen, or C₁₋₂₀ alkyl, provided that at least four of R₃₁ to R₃₅ are C₁₋₂₀ alkyl, and
      R₃₆ and R₃₇ are each independently, hydrogen, C₁₋₂₀ alkyl which is unsubstituted or substituted with one or more halogens, or C₂₋₂₀ alkoxyalkyl, provided that at least one of R₃₆ and R₃₇ is C₁₋₂₀ alkyl substituted with one or more halogens, or C₂₋₂₀ alkoxyalkyl.

In the present invention, the substituents of the above Chemical Formulas are described in more detail as follows.

The halogen may be fluorine (F), chlorine (CI), bromine (Br), or iodine (I).

The C₁₋₂₀ alkyl may be linear, branched, or cyclic alkyl. Specifically, the C₁₋₂₀ alkyl may be C₁₋₂₀ linear alkyl; C₁₋₁₀ linear alkyl; C₁₋₅ linear alkyl; C₃₋₂₀ branched or cyclic alkyl; C₃₋₁₅ branched or cyclic alkyl; or C₃₋₁₀ branched or cyclic alkyl. More specifically, the C₁₋₂₀ alkyl may be a methyl group, an ethyl group, an n-propyl group, an iso-propyl group, an n-butyl group, an iso-butyl group, a tert-butyl group, an n-pentyl group, an iso-pentyl group, or a cyclohexyl group.

The C₁₋₂₀ alkoxy may be a linear, branched, or cyclic alkoxy group. Specifically, the C₁₋₂₀ alkoxy may be a C₁₋₂₀ linear alkoxy group; a C₁₋₁₀ linear alkoxy group; a C₁₋₅ linear alkoxy group; a C₃₋₂₀ branched or cyclic alkoxy group; a C₃₋₁₅ branched or cyclic alkoxy group; or a C₃₋₁₀ branched or cyclic alkoxy group. More specifically, the C₁₋₂₀ alkoxy may be a methoxy group, an ethoxy group, an n-propoxy group, an iso-propoxy group, an n-butoxy group, an iso-butoxy group, a tert-butoxy group, an n-pentoxy group, an iso-pentoxy group, a neo-pentoxy group, or a cyclohexyloxy group.

The C₂₋₂₀ alkoxyalkyl may be a substituent having a structure including -R_{y}-OR_{z}, in which one or more hydrogens of the alkyl group (-R_{y}) are substituted with an alkoxy group (-O-R_{z}). Specifically, the C₂₋₂₀ alkoxyalkyl may be a methoxymethyl group, a methoxyethyl group, an ethoxymethyl group, an iso-propoxymethyl group, an isopropoxyethyl group, an iso-propoxyhexyl group, a tert-butoxymethyl group, a tert-butoxyethyl group, or a tert-butoxyhexyl group.

The C₆₋₂₀ aryl may be a monocyclic, bicyclic, or tricyclic aromatic hydrocarbon. Specifically, the C₆₋₂₀ aryl may be a phenyl group, a naphthyl group, or an anthracenyl group.

The C₇₋₂₀ alkylaryl may be a substituent where one or more hydrogens of the aryl are substituted with alkyl. Specifically, the C₇₋₂₀ alkylaryl may be methylphenyl, ethylphenyl, n-propylphenyl, iso-propylphenyl, n-butylphenyl, iso-butylphenyl, tert-butylphenyl, di-tert-butylphenyl, or cyclohexylphenyl.

The C₇₋₂₀ arylalkyl may be a substituent where one or more hydrogens of the alkyl are substituted with aryl. Specifically, the C₇₋₂₀ arylalkyl may be a benzyl group, phenylpropyl, or phenylhexyl.

Further, the Group 4 transition metal may be titanium, zirconium, hafnium, etc.

The hybrid supported metallocene catalyst according to the present invention is a hybrid catalyst that includes both a first transition metal compound with high molecular weight and high copolymerization properties, and a second transition metal compound with low molecular weight and low copolymerization properties.

Specifically, the first transition metal compound represented by the above Chemical Formula 1 or Chemical Formula 2 contributes to making a high-molecular-weight copolymer having a high SCB content, and the second transition metal compound represented by the above Chemical Formula 3 contributes to manufacturing a low-molecular-weight copolymer having a low SCB (short chain branch) content.

Accordingly, the hybrid supported metallocene catalyst of the present invention can exhibit high copolymerization properties in the high-molecular-weight region of polyethylene due to the first transition metal compound, while exhibiting low copolymerization properties in the low-molecular-weight region of polyethylene due to the second transition metal compound. As a result, the polyethylene manufactured using the hybrid supported metallocene catalyst according to the present invention has a high content of fractions that contribute greatly to dart drop impact strength, and the low-crystalline and high-crystalline contents are appropriately harmonized, so that it can exhibit excellent dart drop impact strength and processability, as well as excellent transparency.

In particular, as confirmed in Examples and Experimental Examples to be described later, the polyethylene manufactured using the hybrid supported metallocene catalyst according to the present invention can maintain dart drop impact strength, processability, and transparency at a level equivalent to the polyethylene manufactured using a comonomer with 6 or more carbon atoms such as 1-hexene, even when using inexpensive 1-butene as the comonomer, thus also securing price competitiveness.

In the hybrid supported metallocene catalyst according to the present invention, the first transition metal compound contributes to the manufacturing of a high-molecular-weight, low-crystalline copolymer, and exhibits a relatively higher comonomer incorporation rate compared to the second transition metal compound.

Specifically, in the above Chemical Formula 1, X₁₁ and X₁₂ are each independently, C₁₋₂₀ alkyl, or halogen, preferably may be C₁₋₆ alkyl or halogen, and more preferably may be chloro (Cl), or methyl.

As the first transition metal compound represented by Chemical Formula 1 includes Hf (hafnium) as a central metal, the effect of molecular weight increase due to comonomer incorporation is greater compared to when it includes other group 4 elements such as Zr. As a result, it is effective for manufacturing a high-molecular-weight copolymer that maintains a low-crystalline state.

R₁₁ to R₁₅ are each independently hydrogen, C₁₋₂₀ alkyl, C₂₋₂₀ alkoxyalkyl, C₆₋₂₀ aryl, C₇₋₂₀ alkylaryl, or C₇₋₂₀ arylalkyl, or two adjacent substituents among R₁₁ to R₁₅ are linked to each other to form a C₆₋₂₀ aromatic ring which is substituted or unsubstituted. Preferably, they may be hydrogen, C₁₋₆ alkyl, or an alkoxyalkyl of - (CH₂)ₙ-Rₐ (wherein Rₐ is a C₃₋₆ branched alkoxy group, and n is an integer of 2 to 10), or two adjacent substituents among R₁₁ to R₁₅ may be linked to each other to form a benzene ring. More preferably, R₁₁ to R₁₅ are each independently, hydrogen, methyl, ethyl, n-propyl, iso-propyl, n-butyl, iso-butyl, tert-butyl, tert-butoxyethyl, tert-butoxypropyl, tert-butoxybutyl, tert-butoxypentyl, or tert-butoxyhexyl, or two adjacent substituents among R₁₁ to R₁₅ may be linked to each other to form a benzene ring. When two adjacent substituents among R₁₁ to R₁₅ are linked to each other to form a benzene ring, the benzene ring may be substituted or unsubstituted with C₁₋₆ alkyl.

R₁₆ to R₂₀ are each independently hydrogen, C₁₋₂₀ alkyl, or C₂₋₂₀ alkoxyalkyl, and preferably may be hydrogen, C₁₋₆ alkyl, or an alkoxyalkyl of -(CH₂)ₙ-Rₐ (wherein Rₐ is a C₃₋₆ branched alkoxy group, and n is an integer of 2 to 10). More preferably, R₁₆ to R₂₀ may be each independently hydrogen, methyl, ethyl, n-propyl, iso-propyl, n-butyl, iso-butyl, or tert-butyl.

Specific examples of the first transition metal compound represented by Chemical Formula 1 include the compounds of the following structures, but the present invention is not limited thereto.

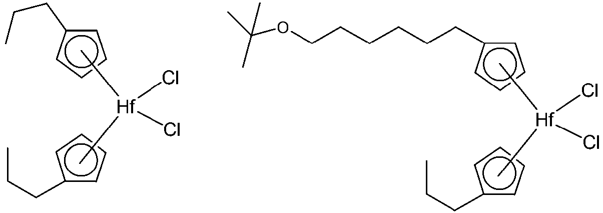

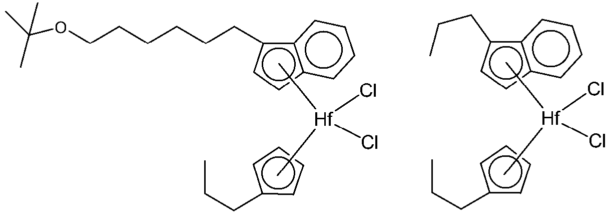

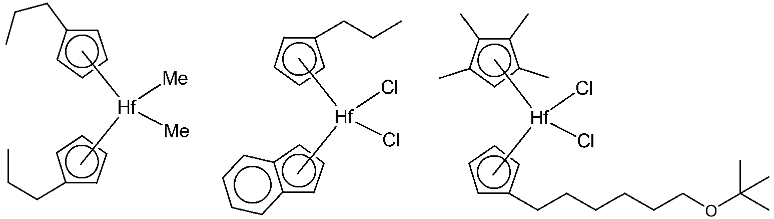

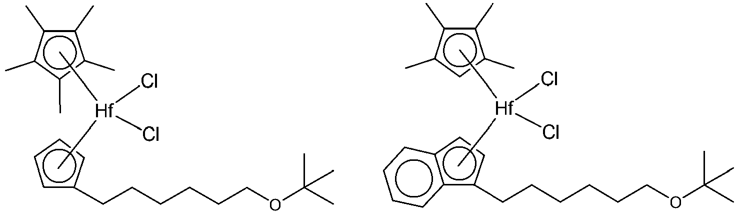

The first transition metal compound represented by Chemical Formula 1 described above can be synthesized by applying known reactions, and more detailed synthetic methods can be found in the Examples section.

Meanwhile, the first transition metal compound represented by Chemical Formula 2 has a structure in which a ring compound containing thiophene and an amine-based compound are cross-linked, so that the electronic/steric environment around the transition metal can be easily controlled. As a result, the comonomer incorporation amount of the synthesized polyethylene can be adjusted, so that properties such as crystallinity and molecular weight can be easily adjusted to a desired level.

Specifically, within the structure of the transition metal compound represented by Chemical Formula 2, the ring compound containing thiophene can increase the basic molecular weight as the heteroatom exerts an electron-donating effect, and the amine-based compound can influence the adjustment of the comonomer incorporation amount together with the central metal.

In the above Chemical Formula 2, M₂ is a group 4 transition metal, preferably zirconium (Zr), or titanium (Ti), and more preferably titanium (Ti).

X₂₁ and X₂₂ are each independently, C₁₋₂₀ alkyl, or halogen, preferably C₁₋₆ alkyl, and more preferably methyl.

When titanium (Ti) is included as the central metal of the first transition metal compound represented by Chemical Formula 2, the size of the active site can be appropriately maintained compared to when other group 4 elements such as Zr, Hf, etc., are included, and as a result, a more excellent comonomer incorporation effect can be exhibited.

In addition, the compound represented by Chemical Formula 2 includes an A₂(Q₂₁)(Q₂₂) group as a bridge group of a ring compound containing thiophene and an amine. In the above Chemical Formula 2, A₂ is carbon, silicon, or germanium, and preferably silicon.

Further, the substituents of A₂, Q₂₁ and Q₂₂, are each independently, halogen, C₁₋₂₀ alkyl, or C₂₋₂₀ alkoxyalkyl, provided that at least one of Q₂₁ and Q₂₂ is C₂₋₂₀ alkoxyalkyl. Preferably, at least one of the substituents of A₂, Q₂₁ and Q₂₂, may include a tether group of C₂₋₂₀ alkoxyalkyl. As such, when it has a tether group, leaching of the catalyst precursor is prevented during the polymerization reaction, and as a result, fouling due to the reaction of the leached catalyst precursor and the cocatalyst can be prevented.

In addition, when the bridge group includes a tether group, any one among Q₂₁ and Q₂₂, the substituents of A₂, is C₂₋₂₀ alkoxyalkyl, and the other may be C₁₋₂₀ alkyl. As such, when any one of Q₂₁ and Q₂₂ includes a tether group of C₂₋₂₀ alkoxyalkyl as a bridge group connecting two ligands, in addition to the effect of preventing leaching of the catalyst precursor, the larger atomic size and wide coordination angle compared to conventional carbon bridges in metallocene compounds facilitate monomer access during polymerization, thereby enhancing catalytic activity. This effect can be further increased when any one of Q₂₁ and Q₂₂ in the tether is -(CH₂)n-R_{b} (wherein R_{b} may be a C₁₋₆ alkoxy group, more specifically a C₁₋₆ straight-chain alkoxy group or a C₃₋₆ branched alkoxy group, and more specifically a C₃₋₆ branched alkoxy such as a tert-butoxy group, and n is an integer of 2 to 10, or 3 to 9), and further when the other is a C₁₋₄ alkyl. Preferably, any one of Q₂₁ and Q₂₂ may be tert-butoxyhexyl, and the other may be methyl.

In addition, in the first transition metal compound represented by Chemical Formula 2, R₂₁ and R₂₂ are each independently, hydrogen or C₁₋₂₀ alkyl, R₂₃ and R₂₄ are each independently, hydrogen, or C₁₋₂₀ alkyl, or are linked to each other to form a C₆₋₂₀ aromatic ring which is substituted or unsubstituted, and R₂₅ is C₁₋₂₀ alkyl. Preferably, R₂₁, R₂₂, and R₂₅ may be each independently, C₁₋₆ alkyl, and R₂₃ and R₂₄ may be each independently, hydrogen, or C₁₋₆ alkyl, or may be linked to each other to form a benzene ring. More preferably, R₂₁, R₂₂, and R₂₅ may be each independently, methyl, ethyl, n-propyl, iso-propyl, n-butyl, iso-butyl, or tert-butyl, and R₂₃ and R₂₄ may be each independently, hydrogen, methyl, ethyl, n-propyl, iso-propyl, n-butyl, iso-butyl, or tert-butyl, or R₂₃ and R₂₄ may be linked to each other to form a benzene ring. When R₂₃ and R₂₄ are linked to each other to form a benzene ring, the benzene ring may be substituted or unsubstituted with C₁₋₆ alkyl.

Specific examples of the first transition metal compound represented by Chemical Formula 2 include the compounds of the following structures, but the present invention is not limited thereto.

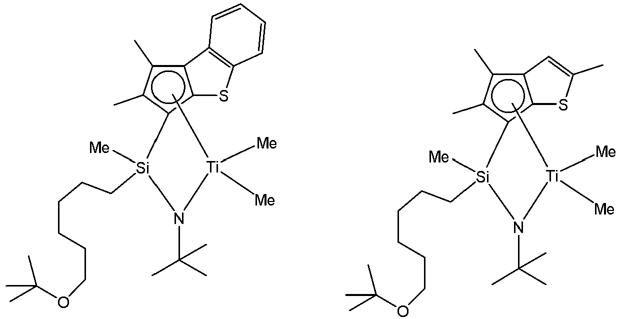

The first transition metal compound represented by Chemical Formula 2 described above can be synthesized by applying known reactions, and more detailed synthetic methods can be found in the Examples section.

Meanwhile, the second transition metal compound represented by Chemical Formula 3 has a structure in which a hydrogenated indene, specifically a 4,5,6,7-tetrahydro-1-indene derivative compound, and a cyclopentadiene derivative compound are non-cross-linked, so the electronic/steric environment around the transition metal can be easily controlled. As a result, properties such as the molecular weight of the synthesized polyethylene and the copolymerization properties of the comonomer can be easily adjusted.

Specifically, in the above Chemical Formula 3, M₃ is a group 4 transition metal, preferably zirconium (Zr), or titanium (Ti), and more preferably zirconium (Zr).

When Zr is included as the central metal of the second transition metal compound represented by Chemical Formula 3, the size of the active site can be effectively controlled compared to when other group 4 elements such as Hf are included. This facilitates the influx of hydrogen in the catalyst reaction, contributing to the production of polyethylene with a relatively low molecular weight, and can help the polyethylene to exhibit low copolymerization properties by limiting the influx of comonomer. In addition, when the second transition metal compound having such characteristics is used together with the first transition metal compound represented by Chemical Formula 1 or Chemical Formula 2, an appropriate synergy effect can be exhibited.

X₃₁ and X₃₂ are each independently, C₁₋₂₀ alkyl, or halogen, preferably halogen, and more preferably chloro (Cl).

In addition, in the second transition metal compound represented by Chemical Formula 3, the cyclopentadiene derivative compound is substituted with substituents R₃₁ to R₃₅ and can exhibit more excellent catalyst activity due to the inductive effect that can supply sufficient electrons. By appropriately controlling the molecular weight and comonomer distribution of the polyethylene produced using the first transition metal compound represented by Chemical Formula 1 or Chemical Formula 2 in combination, both impact strength and processability can be simultaneously improved.

The substituents R₃₁ to R₃₅ of the cyclopentadiene derivative compound are each independently, hydrogen, or C₁₋₂₀ alkyl, provided that at least four of R₃₁ to R₃₅ are C₁₋₂₀ alkyl. More specifically, R₃₁ to R₃₅ may be each independently, hydrogen, or C₁₋₆ alkyl, provided that at least four of R₃₁ to R₃₅ are C₁₋₆ alkyl. More preferably, R₃₁ to R₃₅ may be each independently, hydrogen, or methyl, and at least four of R₃₁ to R₃₅ may be methyl. Here, at least four means four or five substituents out of the five substituents R₃₁ to R₃₅.

In addition, when including a hydrogenated indene group, i.e., a 4,5,6,7-tetrahydro-1-indene group, as a ligand, it exhibits more excellent hydrogen reactivity compared to the case of including a conventional indene group, thereby reducing the amount of hydrogen introduced and the amount of wax generated during the polymerization reaction, and as a result, improving process stability.

In addition, in the second transition metal compound represented by Chemical Formula 3, the 1-position and 3-position of the 4,5,6,7-tetrahydro-1-indene group may be substituted or unsubstituted. That is, as described above, the substituents of the 4,5,6,7-tetrahydro-1-indene group of the second transition metal compound, R₃₆ and R₃₇, are each independently, hydrogen, C₁₋₂₀ alkyl which is unsubstituted or substituted with one or more halogens, or C₂₋₂₀ alkoxyalkyl, provided that at least one of R₃₆ and R₃₇ is C₁₋₂₀ alkyl substituted with one or more halogens, or C₂₋₂₀ alkoxyalkyl.

Specifically, one of R₃₆ and R₃₇ may be hydrogen, or C₁₋₆ alkyl, and the other may be C₁₋₆ alkyl which is unsubstituted or substituted with one or more halogens, or an alkoxyalkyl of -(CH₂)ₙ-R_{c} (wherein R_{c} is a C₃₋₆ branched alkoxy group, and n is an integer of 2 to 10). In addition, in the -(CH₂)ₙ-R_{c}, R_{c} may be a C₃₋₆ branched alkoxy group, more specifically a C₃₋₆ branched alkoxy such as a tert-butoxy group, and n may be an integer of 3 to 9. Preferably, one of R₃₆ and R₃₇ may be hydrogen, or C₁₋₆ alkyl, and the other may be C₁₋₆ alkyl which is unsubstituted or substituted with one or more fluorines (F), or an alkoxyalkyl of -(CH₂)ₙ-R_{c} (wherein R_{c} is a C₃₋₆ branched alkoxy group, and n is an integer of 2 to 10).

Specific examples of the second transition metal compound represented by Chemical Formula 3 include the compounds of the following structures, but the present invention is not limited thereto.

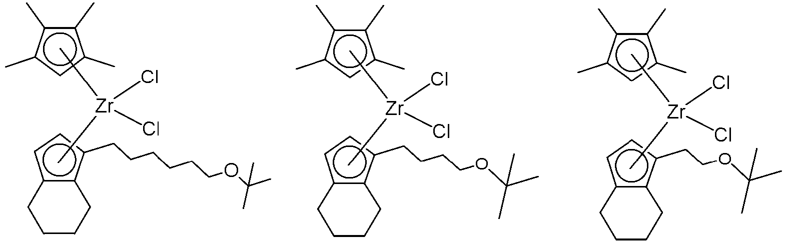

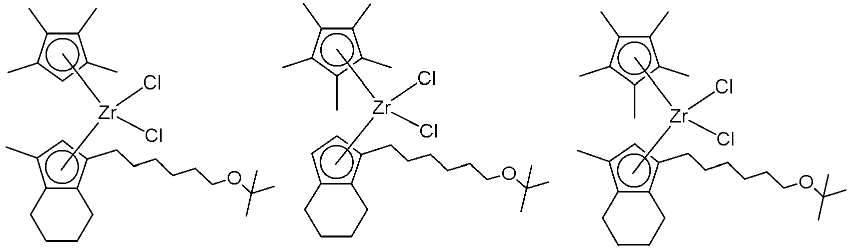

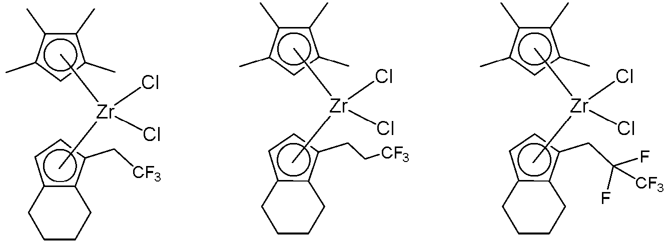

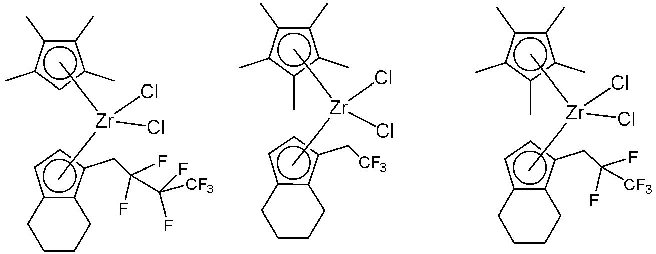

The second transition metal compound represented by Chemical Formula 3 described above can be synthesized by applying known reactions, and more detailed synthetic methods can be found in the Examples section.

Meanwhile, the hybrid supported metallocene catalyst according to the present invention can increase the catalyst activity and further improve the physical properties of the manufactured polymer by controlling the molar ratio of the first and second transition metal compounds.

For example, the hybrid supported metallocene catalyst may include the first and second transition metal compounds in a molar ratio of 1:10 to 10:1. When the above mixing ratio condition is satisfied, the activity of the catalyst is maintained excellently, and high copolymerization property and low copolymerization property of the polyethylene manufactured from the hybrid supported catalyst are optimized, so that not only dart drop impact strength but also transparency and processability can be further improved. More specifically, the molar ratio of the first and second transition metal compounds may be 1:10 or more, 1:5 or more, 1:4 or more, 1:3 or more, 1:2 or more, or 1:1 or more, and 10:1 or less, 5:1 or less, 4:1 or less, 3:1 or less, or 2:1 or less, considering the individual catalyst activity of each transition metal.

In addition, the hybrid supported metallocene catalyst according to the present invention includes a cocatalyst. When the hybrid supported metallocene catalyst includes a cocatalyst, it can exhibit high catalyst activity and improve process stability.

Specifically, the cocatalyst may include one or more of the compounds represented by the following Chemical Formula 4.

[Chemical Formula 4] -[Al(R₄₁)-O]a-

In the above Chemical Formula 4,
R₄₁ is a halogen; or a C₁₋₂₀ hydrocarbyl which is unsubstituted or substituted with halogen; and
a is an integer of 2 or more.

Meanwhile, in this specification, the hydrocarbyl group refers to a monovalent functional group derived from a hydrocarbon by the removal of one hydrogen atom, and may include an alkyl group, an alkenyl group, an alkynyl group, an aryl group, an aralkyl group, an aralkenyl group, an aralkynyl group, an alkylaryl group, an alkenylaryl group, and an alkynylaryl group, etc. Further, a C₁₋₂₀ hydrocarbyl group may be a C₁₋₁₅ or C₁₋₁₀ hydrocarbyl group. Specifically, a C₁₋₂₀ hydrocarbyl group may be a linear, branched or cyclic alkyl group such as a methyl group, an ethyl group, an n-propyl group, an iso-propyl group, an n-butyl group, an iso-butyl group, a tert-butyl group, an n-pentyl group, an n-hexyl group, an n-heptyl group, or a cyclohexyl group; or an aryl group such as a phenyl group, a naphthyl group, or an anthracenyl group.

Examples of the compound represented by Chemical Formula 4 may include alkyl aluminoxane-based compounds such as methylaluminoxane, ethylaluminoxane, isobutylaluminoxane, or butylaluminoxane, and any one or a mixture of two or more thereof may be used.

Among the above compounds, the cocatalyst may more specifically be an alkylaluminoxane-based cocatalyst such as methylaluminoxane.

In addition, the amount of the cocatalyst used may be appropriately adjusted depending on the desired effect of the catalyst and the physical properties of the resulting polyethylene. For example, when silica is used as the support, as described below, the cocatalyst may be supported in an amount of, for instance, 100 g or more, 1000 g or more, or 2000 g or more, and 6000 g or less, 5500 g or less, or 5400 g or less, based on 1000 g of silica.

In addition, the hybrid supported metallocene catalyst according to the present invention may include a support. When the hybrid supported metallocene catalyst includes the support, the first and second transition metal compounds are used in the form of supported catalysts supported on the support.

As the support, a support having highly reactive hydroxyl groups, silanol groups, or siloxane groups on its surface may be used, and to this end, a support which has been surface-modified by calcination, or from which surface moisture has been removed by drying, may be used.

For example, silica prepared by calcining silica gel, silica dried at high temperature, silica-alumina, or silica-magnesia may be used. These supports may typically contain components such as oxides, carbonates, sulfates, and nitrates, including Na₂O, K₂CO₃, BaSO₄, and Mg(NO₃)₂.

When used in the form of a supported catalyst, the resulting polymer exhibits excellent particle morphology and bulk density, making it suitable for conventional slurry, bulk, or gas-phase polymerization processes. Among various supports, silica is particularly advantageous because the functional groups of the transition metal compounds are chemically bonded and supported thereon. As a result, catalyst leaching from the support surface during the ethylene polymerization process is minimal, thereby reducing fouling caused by polymer adhesion to the reactor walls or agglomeration between polymer particles in slurry or gas-phase polymerization.

The support may have an average particle size (D50) of 20 to 40 µm. When having the particle size described above, transition metal compounds may be supported with higher efficiency, and as a result, catalyst activity can be increased. More specifically, it can be 20 µm or more, or 25 µm or more, and 40 µm or less, or 30 µm or less.

In addition, when supported on the support, the first and second transition metal compounds may each be supported in an amount of, for example, 1 mmol or more, 3 mmol or more, 5 mmol or more, 7 mmol or more, or 10 mmol or more, and 100 mmol or less, 80 mmol or less, 60 mmol or less, or 50 mmol or less, per 1 g of silica support. When supported within this range, the catalyst can exhibit appropriate catalytic activity, which may be advantageous in terms of maintaining catalyst performance and cost efficiency.

The hybrid supported metallocene catalyst or the catalyst composition having the above-described configuration according to the present invention may be prepared by a method including: a step of supporting a cocatalyst compound on a support, and a step of supporting the first and second transition metal compounds on the support. The order of supporting the cocatalyst and the first and second transition metal compounds may be varied as needed, and the order of supporting the first and second transition metal compounds may also be changed. Alternatively, the first and second transition metal compounds may also be supported simultaneously. Considering the effects of the structure formed depending on the order of supporting, it is particularly advantageous to first support the cocatalyst on a support, followed by sequentially supporting the first and second transition metal compounds. This approach can provide a supported catalyst exhibiting high catalytic activity and improved process stability during polyethylene production.

As described above, the hybrid supported metallocene catalyst according to the present invention may exhibit excellent catalytic activity by including the first and second transition metal compounds having specific structures. Accordingly, the hybrid supported metallocene catalyst can be suitably used for the polymerization of ethylene monomers and olefin-based monomers.

Thus, there is also provided a method for preparing a polyethylene including the step of polymerizing an ethylene monomer and an alpha-olefin based monomer in the presence of the hybrid supported metallocene catalyst while introducing hydrogen.

Specific examples of the α-olefin-based monomer may include propylene, 1-butene, 1-pentene, 4-methyl-1-pentene, 1-hexene, 1-heptene, 1-octene, 1-decene, 1-undecene, 1-dodecene, 1-tetradecene, 1-hexadecene, 1-eicosene, norbornene, norbornadiene, ethylidenenorbornene, phenylnorbornene, vinylnorbornene, dicyclopentadiene, 1,4-butadiene, 1,5-pentadiene, 1,6-hexadiene, styrene, α-methylstyrene, divinylbenzene, and 3-chloromethylstyrene, and two or more of these monomers may be used in combination for copolymerization. Preferably, the α-olefin-based monomer may be 1-butene, 1-hexene, or 1-octene. More preferably, it may be 1-butene.

The amount of the α-olefin-based monomer to be introduced may be determined based on the desired physical properties of the resulting polyethylene. For example, in consideration of the intended physical properties of the polyethylene and the desired improvements in transparency and processability, the α-olefin-based monomer may be introduced in an amount of 5 to 20 wt% based on a total weight of the monomers including the ethylene monomer and the α-olefin-based monomer. More specifically, the α-olefin-based monomer may be introduced in an amount of 5 wt% or more, 6 wt% or more, 7 wt% or more, or 8 wt% or more, and 25 wt% or less, 23 wt% or less, 21 wt% or less, or 20 wt% or less, based on the total weight of the monomers including the ethylene monomer and the α-olefin-based monomer.

The polymerization reaction is performed while introducing hydrogen.

Specifically, hydrogen may be introduced in an amount of 5 to 500 ppm, more specifically 5 ppm or more, or 10 ppm or more, and 500 ppm or less, 450 ppm or less, 400 ppm or less, 350 ppm or less, 300 ppm or less, or 250 ppm or less, based on the total weight of the monomers including the ethylene monomer and the α-olefin-based monomer. Introducing hydrogen within this range may facilitate achieving the desired physical properties of the resulting polyethylene. When the polymerization reaction is performed under hydrogen-free conditions, the melt index (MI) of the resulting polyethylene may be significantly reduced.

The polymerization reaction may be performed as a slurry polymerization.

Accordingly, the polymerization may be performed using a single continuous slurry polymerization reactor or a loop slurry reactor.

In addition, the hybrid supported catalyst may be dissolved or diluted in an aliphatic hydrocarbon solvent having 4 to 12 carbon atoms such as isobutane, pentane, hexane, heptane, nonane, decane, and their isomers, in an aromatic hydrocarbon solvent such as toluene or benzene, or in a chlorinated hydrocarbon solvent such as dichloromethane or chlorobenzene, and then injected. It is preferable to use the solvent after removing trace amounts of water or air that may act as catalyst poisons by treating with a small amount of alkyl aluminum, and the use of an additional cocatalyst is also possible.

The polymerization reaction may be performed at a temperature of 40°C or higher, 60°C or higher, or 80°C or higher, and 110°C or lower, 100°C or lower, or 90°C or lower. Moreover, when the pressure is controlled during the polymerization, the reaction may be performed under a pressure of 5 bar or more, 10 bar or more, or 20 bar or more, and 50 bar or less, 45 bar or less, or 40 bar or less. Performing the polymerization under these temperature and pressure conditions may facilitate the attainment of the desired physical properties of the polyethylene.

The polyethylene manufactured by the above preparation method is excellent in all of processability, represented by processing pressure, impact strength, measured by dart drop impact strength, and transparency, measured by haze. In a preferred embodiment, the polyethylene may be an ethylene/1-butene copolymer.

Specifically, the polyethylene manufactured using the hybrid supported metallocene catalyst satisfies the following conditions (i) to (ii):
(i) density measured in accordance with ASTM D1505: 0.910 to 0.930 g/cm³
(ii) dart drop impact strength measured in accordance with ASTM D1709 [Method A] is 700 g or more.

More specifically, the polyethylene has a density measured in accordance with ASTM D1505 of 0.910 g/cm³ or more, or 0.915 g/cm³ or more, and 0.930 g/cm³ or less, or 0.926 g/cm³ or less.

In addition, after manufacturing a polyethylene film (expansion ratio (BUR, Blown-Up Ratio) of 2 to 3, more specifically 2.5, and film thickness of 45 to 55 µm, more specifically 50 µm) using a film making machine, the dart drop impact strength measured in accordance with ASTM D1709 [Method A] is 700 g or more, more specifically 800 g or more, 850 g or more, 900 g or more, 950 g or more, or 1000 g or more, and 2000 g or less, 1500 g or less, or 1400 g or less.

In addition, the polyethylene may have a processing pressure (processing load, bar) measured using a Haake extruder under the conditions of cylinder-1/-2/-3/die = 180/185/185/190 and 40 rpm, 350 bar or less, more specifically 320 bar or less, 300 bar or less, 280 bar or less, or 260 bar or less. The lower limit of the processing pressure is not particularly limited as smaller is better, but for example, it may be 100 bar or more, 110 bar or more, 120 bar or more, 130 bar or more, 140 bar or more, or 150 bar or more. The measurement method of the processing pressure is described in Examples below.

In addition, the polyethylene may have a haze measured in accordance with ISO 13468 of 20% or less, 18% or less, 16% or less, 15% or less, or 14% or less. The lower limit of haze is not particularly limited as smaller is better, but for example, it may be 1.0% or more, 2.0% or more, 3.0% or more, 4.0% or more, or 5.0% or more. The measurement method of the haze is also described in Examples below.

### [Advantageous Effects of Invention]

As described above, the hybrid supported metallocene catalyst according to the present invention exhibits high activity for olefin polymerization and can manufacture a polyethylene having excellent processability and high impact strength characteristics.

Accordingly, the polyethylene manufactured using the hybrid supported metallocene catalyst is excellent in dart drop impact strength, processability, and transparency, and can be usefully used for applications such as films.

### [Best Mode for Carrying Out the Invention]

Hereinafter, preferred embodiments are provided to aid in the understanding of the present invention. However, the following embodiments are merely for illustrating the present invention, and are not intended to limit the scope of the present invention.

### <Preparation of transition metal compound>

### Synthesis Example 1-1

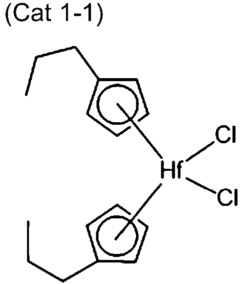

The PC-1316 product from SPCI Inc. was purchased and used.

### Synthesis Example 1-2

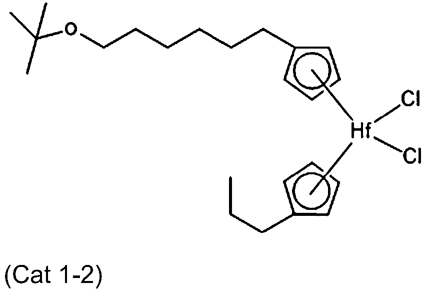

1-iodopropane (1 equiv.) was added to THF (tetrahydrofuran, 0.3 M) under Ar₂. After cooling to -25 °C, NaCp (20 wt% in THF, 1 eq) was slowly added dropwise. After stirring overnight at room temperature, H₂O was added and the mixture was transferred to a separatory funnel for work up. The organic layer was dried with MgSO₄ and filtered. This was dried to synthesize n-propyl cyclopentadiene.

The obtained n-propyl cyclopentadiene (1 equiv.) was added to THF (0.3 M) under Ar₂. After cooling to -25 °C, n-butyl lithium (2.5M in hexane, 1 eq) was slowly added dropwise. The mixture was stirred for 3 hours at room temperature, cooled to - 25 °C, and then HfCl₄ (Hafnium(IV) chloride, 0.5 eq) dissolved in Toluene (1 M) was added as a slurry. After stirring overnight at room temperature, all the solvent was dried off. DCM (dichloromethane) was added, and the filtrate was obtained through filtering, and this filtrate was dried to obtain bis(n-propylcyclopentadiene)hafnium dichloride. To the obtained bis(n-propylcyclopentadiene)hafnium dichloride (1 equiv.), HfCl₄ (1 equiv.) was added, and then Toluene (0.5 M) was added. The mixture was stirred overnight at reflux, cooled to room temperature, and then filtered to obtain n-propylcyclopentadiene hafnium trichloride.

t-Butyl-O-(CH₂)₆-Cl was prepared using 6-chlorohexanol by the method presented in the literature (Tetrahedron Lett. 2951 (1988)), and reacted with NaCp to obtain t-Butyl-O-(CH₂)₆-C₅H₅. This t-butyl-O-(CH₂)₆-C₅H₅ (1 equiv.) was added to THF (0.3 M) under Ar₂. After cooling to -25 °C, n-BuLi (2.5 M, 1 eq) was slowly added dropwise. The mixture was stirred for 3 hours at room temperature, cooled to -25 °C, and then the previously obtained n-propylcyclopentadiene hafnium trichloride (1 equiv.) was added. After stirring overnight at room temperature, all the solvent was dried off. DCM was added, and the filtrate was obtained through filtering, and this filtrate was dried to obtain the transition metal compound of Cat 1-2.
¹H NMR(500 MHz, CDCl₃, 7.26 ppm): 1.16-1.19(14H, m), 1.31-1.39(4H, m), 1.51-1.57(4H, m), 1.71-1.85(2H, m), 2.62-2.65(4H, m), 3.42(2H, t), 5.96(2H, s), 6.03 (2H, s), 6.22(2H, s), 6.30(2H, s)

### Synthesis Example 1-3

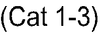

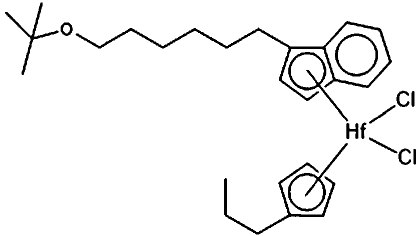

Indene (1 equiv.) was added to THF (0.3M) under Ar₂. After cooling to -25 °C, n-BuLi (2.5M, 1 eq) was slowly added dropwise. The mixture was stirred for 3 hours at room temperature, cooled to -25 °C, and then t-Butyl-O-(CH₂)₆-Cl (1 equiv.) synthesized in the above Synthesis Example 1-2 and NaI (sodium iodide, 0.1 equiv.) were added. After stirring overnight at room temperature, H₂O was added and the mixture was transferred to a separatory funnel for work up. The organic layer was dried with MgSO₄ and filtered. This was dried to obtain 3-(t-butyl-O-(CH₂)₆)-Indene.

The obtained 3-(t-butyl-O-(CH₂)₆)-Indene (1 equiv.) was added to THF (0.3 M) under Ar₂. After cooling to -25 °C, n-BuLi (2.5M, 1eq) was slowly added dropwise. The mixture was stirred for 3 hours at room temperature, cooled to -25 °C, and then n-propylcyclopentadiene hafnium trichloride (1 equiv.) synthesized in the above Synthesis Example 1-2 was added. After stirring overnight at room temperature, all the solvent was dried off. DCM was added, and the filtrate was obtained through filtering, and this filtrate was dried to obtain the transition metal compound of Cat 1-3.

¹H NMR(500 MHz, CDCl₃, 7.26 ppm): 1.18-1.20(14H, m), 1.33-1.38(4H, m), 1.52-1.56(4H, m), 1.72-1.86(2H, m), 2.61-2.64(4H, m), 3.43(2H, t), 6.22(2H, s), 6.25(1H, s), 6.30(2H, s), 7.25(1H, t), 7.35(1H, t), 7.42(1H, d), 7.51(1H, d).

### Synthesis Example 1-4

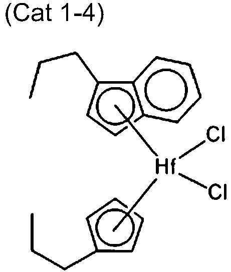

The transition metal compound of Cat 1-4 was obtained in the same manner as in Synthesis Example 1-3, except that 1-iodobutane (1 equiv.) was used instead of t-Butyl-O-(CH₂)₆-Cl and Nal in Synthesis Example 1-3.

¹H NMR(500 MHz, CDCl₃, 7.26 ppm): 0.98(3H, t), 1.17(3H, t), 1.42-1.48(2H, m), 1.71-1.89(4H, m), 2.60-2.65(4H, m), 6.21(2H, s), 6.24(1H, s), 6.30(2H, s), 7.24(1H, t), 7.34(1H, t), 7.41(1H, d), 7.50(1H, d).

### Synthesis Example 1-5

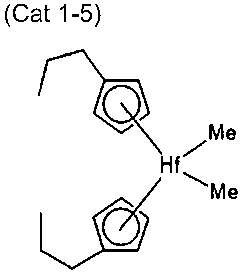

The PC-1314 product from SPCI Inc. was purchased and used.

### Synthesis Example 1-6

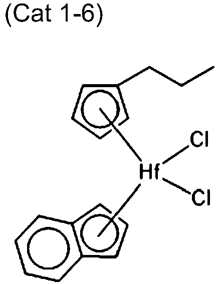

Indene (1 equiv.) was added to THF (0.3 M) under Ar₂. After cooling to -25 °C, n-BuLi (2.5M, 1 equiv.) was slowly added dropwise. The mixture was stirred for 3 hours at room temperature, cooled to -25 °C, and then n-propylcyclopentadiene hafnium trichloride (1 equiv.) synthesized in the above Synthesis Example 1-2 was added. After stirring overnight at room temperature, all the solvent was dried off. DCM was added, and the filtrate was obtained through filtering, and this filtrate was dried to obtain the transition metal compound of Cat 1-6.

¹H NMR(500 MHz, CDCl₃, 7.26 ppm): 1.18(3H, t), 1.79-1.82(2H, m), 2.62(2H, t), 6.17(2H, s), 6.20(2H, s), 6.30(2H, s), 6.32(1H, t), 7.28(2H, m), 7.59(2H, m).

### Synthesis Example 1-7

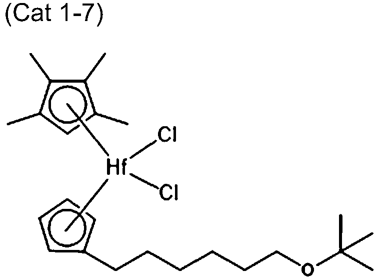

t-Butyl-O-(CH₂)₆-C₅H₅ (1 equiv.) synthesized in Synthesis Example 1-2 was added to THF (0.3M) under Ar₂. After cooling to -25 °C, n-BuLi (2.5M, 1 equiv.) was slowly added dropwise. The mixture was stirred for 3 hours at room temperature, cooled to -25 °C, and then TMCpHfCl₃(tetramethylcyclopentadienyl hafnium trichloride, 1 equiv.) was added. After stirring overnight at room temperature, all the solvent was dried off. DCM was added, and the filtrate was obtained through filtering, and this filtrate was dried to obtain the transition metal compound of Cat 1-7.

¹H NMR(500 MHz, CDCl₃, 7.26 ppm): 1.16-1.19(11H, m), 1.32-1.38(4H, m), 1.54-1.58(4H, m), 1.98(6H, s), 2.02(3H, s), 2.19(3H, s), 2.65(2H, t), 3.30(2H, t), 5.90(1H, s), 6.22 (2H, s), 6.29(2H, s).

### Synthesis Example 1-8

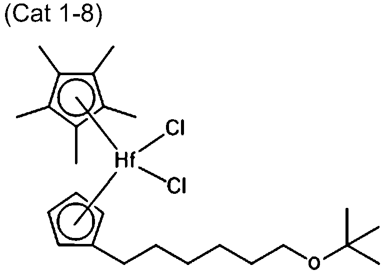

The transition metal compound of Cat 1-8 was obtained in the same manner as in Synthesis Example 1-7, except that PMCpHfCl₃(pentamethylcyclopentadienyl hafnium trichloride) was used instead of TMCpHfCl₃(tetramethylcyclopentadienyl hafnium trichloride in Synthesis Example 1-7.

¹H NMR(500 MHz, CDCl₃, 7.26 ppm): 1.14-1.18(11H, m), 1.33-1.38(4H, m), 1.54-1.59(4H, m), 2.04(15H, s), 2.67(2H, t), 3.32(2H, t), 6.22 (2H, s), 6.28(2H, s).

### Synthesis Example 1-9

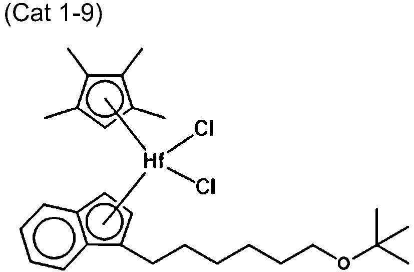

The transition metal compound of Cat 1-9 was obtained in the same manner as in Synthesis Example 1-7, except that 3-(t-butyl-O-(CH₂)₆)-Indene (1 equiv.) synthesized in Synthesis Example 1-3 was used instead of t-Butyl-O-(CH₂)₆-C₅H₅(1 equiv.) in Synthesis Example 1-7.

¹H NMR(500 MHz, CDCl₃, 7.26 ppm): 1.17-1.18(11H, m), 1.32-1.36(4H, m), 1.55-1.58(4H, m), 1.99(6H, s), 2.03(3H, s), 2.20(3H, s), 2.66(2H, t), 3.31(2H, t), 5.50(1H, s), 5.91(1H, dd), 6.42(1H, dd), 7.20(1H, t), 7.29(1H, t), 7.48(1H, t), 7.63(1H, t)

### Synthesis Example 2-1

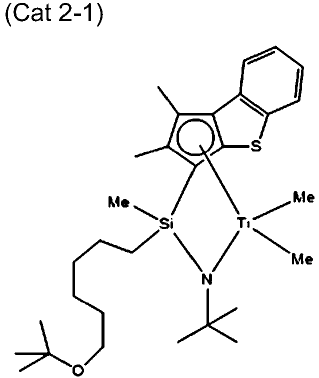

The transition metal compound of the structural formula Cat 2-1 was prepared according to Preparation Example 1 of Korean Laid-Open Patent No. 10-2016-0067803.

### Synthesis Example 2-2

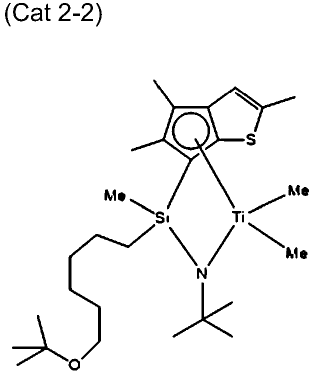

The transition metal compound of the structural formula Cat 2-2 was prepared according to Preparation Example 3 of Korean Laid-Open Patent No. 10-2016-0067803.

### Synthesis Example 3-1

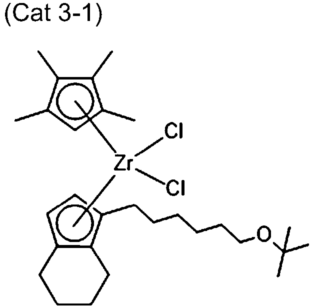

3-(t-butyl-O-(CH₂)₆)-Indene (1 equiv.) synthesized in Synthesis Example 1-3 was added to THF (0.3 M) under Ar₂. After cooling to -25 °C, n-BuLi (2.5M, 1 equiv.) was slowly added dropwise. The mixture was stirred for 3 hours at room temperature, cooled to -25 °C, and then TMCpZrCl₃(tetramethylcyclopentadienyl zirconium trichloride, 1 equiv.) was added. After stirring overnight at room temperature, all the solvent was dried off. DCM was added, and the filtrate was obtained through filtering, and all of this filtrate was dried to obtain an intermediate.

In a glove box, the dried intermediate was dissolved in DCM (0.3 M) and added to a high-pressure bomb reactor along with Pd/C (10 wt% Pd, 10 mol%), and then the reactor was taken out of the glove box. Thereafter, H₂ gas was charged to 10 barg and the mixture was stirred overnight at 40 °C. The residual H₂ gas was vented, and the filtrate was filtered and dried. Thereafter, hexane was added and the mixture was stirred for 3 hours at room temperature. Then, it was filtered and the solid was dried to obtain the transition metal compound of Cat 3-1.

¹H NMR(500 MHz, CDCl₃, 7.26 ppm): 1.17-1.18(11H, m), 1.32-1.36(4H, m), 1.55-1.61(6H, m), 1.82(2H, m) 1.99(6H, s), 2.03(3H, s), 2.21(3H, s), 2.55-2.60(4H, m), 2.71-2.75(2H, m) 3.31(2H, t), 5.12(1H, d), 5.50(1H, s) 5.61(1H, d).

### Synthesis Example 3-2

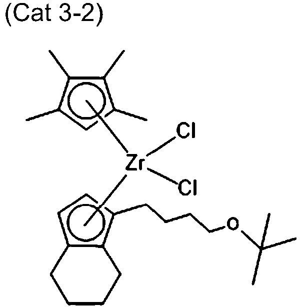

t-Butyl-O-(CH₂)₄-Cl was prepared using 4-chlorobutanol by the method presented in the literature (Tetrahedron Lett. 2951 (1988)). Indene (1 equiv.) was added to THF (0.3M) under Ar₂. After cooling to -25 °C, n-BuLi (2.5 M, 1 equiv.) was slowly added dropwise. The mixture was stirred for 3 hours at room temperature, cooled to -25 °C, and then the prepared t-Butyl-O-(CH₂)₄-Cl (1 equiv.) and NaI (sodium iodide, 0.1 equiv.) were added. After stirring overnight at room temperature, H₂O was added and the mixture was transferred to a separatory funnel for work up. The organic layer was dried with MgSO₄ and filtered. This was dried to synthesize 3-(t-butyl-O-(CH₂)₄)-Indene.

The obtained 3-(t-butyl-O-(CH₂)₄)-Indene (1 equiv.) was added to THF (0.3 M) under Ar₂. After cooling to -25 °C, n-BuLi (2.5 M, 1 equiv.) was slowly added dropwise. The mixture was stirred for 3 hours at room temperature, cooled to -25 °C, and then TMCpZrCl₃(tetramethylcyclopentadienyl zirconium trichloride, 1 equiv.) was added. After stirring overnight at room temperature, all the solvent was dried off. DCM was added, and the filtrate was obtained through filtering, and this filtrate was dried to obtain an intermediate.

In a glove box, the dried intermediate was dissolved in DCM (0.3 M) and added to a high-pressure bomb reactor along with Pd/C (10 wt% Pd, 10 mol%), and then the reactor was taken out of the glove box. Thereafter, H₂ gas was charged to 10 barg and the mixture was stirred overnight at 40 °C. The residual H₂ gas was vented, and the filtrate was filtered and dried. Thereafter, hexane was added and the mixture was stirred for 3 hours at room temperature. Then, it was filtered and the solid was dried to obtain the transition metal compound of Cat 3-2.

¹H NMR(500 MHz, CDCl₃, 7.26 ppm): 1.17-1.19(11H, m), 1.33-1.38(4H, m), 1.55-1.58(2H, m), 1.82(2H, m) 2.00(6H, s), 2.05(3H, s), 2.28(3H, s), 2.60-2.63(4H, m), 2.71-2.75(2H, m) 3.35(2H, t), 5.15(1H, d), 5.51(1H, s) 5.62(1H, d).

### Synthesis Example 3-3

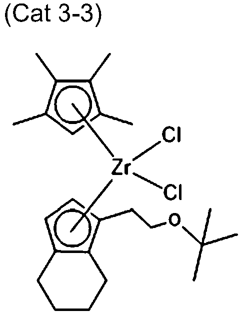

The transition metal compound of Cat 3-3 was obtained in the same manner as in Synthesis Example 3-2, except that 2-chloroethanol was used instead of 4-chlorobutanol in Synthesis Example 3-2.

¹H NMR(500 MHz, CDCl₃, 7.26 ppm): 1.16-1.18(11H, m), 1.52(2H, m), 1.82(2H, m) 1.98(6H, s), 2.03(3H, s), 2.20(3H, s), 2.63(2H, t), 3.36(2H, t), 5.14(1H, d), 5.51(1H, s) 5.61(1H, d).

### Synthesis Example 3-4

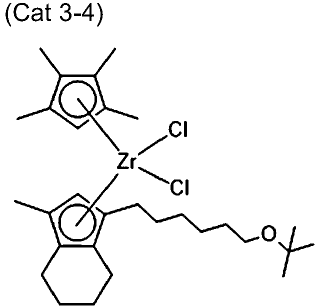

3-(t-butyl-O-(CH₂)₆)-Indene (1 equiv.) synthesized in Synthesis Example 1-3 was added to THF (0.3 M) under Ar₂. After cooling to -25 °C, n-BuLi (2.5M, 1 equiv.) was slowly added dropwise. The mixture was stirred for 3 hours at room temperature, cooled to -25 °C, and then MeI (Iodomethane, 2 equiv.) was added. After stirring overnight at room temperature, H₂O was added and the mixture was transferred to a separatory funnel for work up. The organic layer was dried with MgSO₄ and filtered. This was dried to synthesize 1-Me-3-(t-butyl-O-(CH₂)₆)-Indene.

The obtained 1-Me-3-(t-butyl-O-(CH₂)₆)-Indene (1 equiv.) was added to THF (0.3 M) under Ar₂. After cooling to -25 °C, n-BuLi (2.5 M, 1 equiv.) was slowly added dropwise. The mixture was stirred for 3 hours at room temperature, cooled to -25 °C, and then TMCpZrCl₃(tetramethylcyclopentadienyl zirconium trichloride, 1 equiv.) was added. After stirring overnight at room temperature, all the solvent was dried off. DCM was added, and the filtrate was obtained through filtering, and this filtrate was dried to obtain an intermediate.

In a glove box, the dried intermediate was dissolved in DCM (0.3 M) and added to a high-pressure bomb reactor along with Pd/C (10 wt% Pd, 10 mol%), and then the reactor was taken out of the glove box. Thereafter, H₂ gas was charged to 10 barg and the mixture was stirred overnight at 40 °C. The residual H₂ gas was vented, and the filtrate was filtered and dried. Thereafter, hexane was added and the mixture was stirred for 3 hours at room temperature. Then, it was filtered and the solid was dried to obtain the transition metal compound of Cat 3-4.

¹H NMR(500 MHz, CDCl₃, 7.26 ppm): 1.15-1.16(11H, m), 1.31-1.37(4H, m), 1.54-1.60(6H, m),1.76(3H, s) 1.80(2H, m) 1.99(6H, s), 2.02(3H, s), 2.20(3H, s), 2.53-2.58(4H, m), 2.70-2.75(2H, m), 3.30(2H, t), 5.50(1H, s) 5.53(1H, s).

### Synthesis Example 3-5

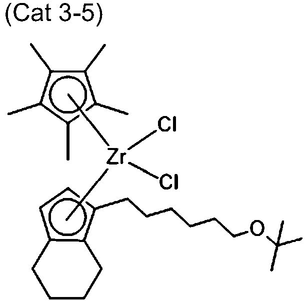

The transition metal compound of Cat 3-5 was obtained in the same manner as in Synthesis Example 3-1, except that PMCpZrCl₃(pentamethylcyclopentadienyl zirconium trichloride, 1 equiv.) was used instead of TMCpZrCl₃(tetramethylcyclopentadienyl zirconium trichloride, 1 equiv.) in Synthesis Example 3-1.

¹H NMR(500 MHz, CDCl₃, 7.26 ppm): 1.14-1.18(11H, m), 1.33-1.37(4H, m), 1.54-1.61(6H, m), 1.82(2H, m) 2.08(15H, s), 2.51-2.54(4H, m), 2.70-2.74(2H, m), 3.30(2H, t), 5.10(1H, d), 5.60(1H, d).

### Synthesis Example 3-6

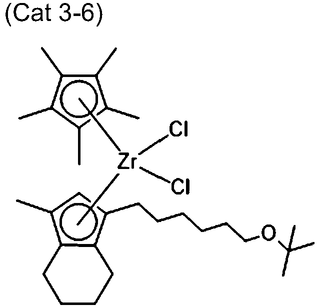

The transition metal compound of Cat 3-6 was obtained in the same manner as in Synthesis Example 3-4, except that PMCpZrCl₃(pentamethylcyclopentadienyl zirconium trichloride, 1 equiv.) was used instead of TMCpZrCl₃(tetramethylcyclopentadienyl zirconium trichloride, 1 equiv.) in Synthesis Example 3-4.

¹H NMR(500 MHz, CDCl₃, 7.26 ppm): 1.15-1.18(11H, m), 1.31-1.38(4H, m), 1.52-1.58(6H, m),1.81(3H, s) 1.85(2H, m) 2.07(15H, s), 2.52-2.57(4H, m), 2.71-2.75(2H, m), 3.31(2H, t), 5.50(1H, s).

### Synthesis Example 3-7

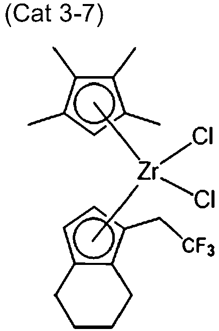

CF₃CH₂OH (2,2,2-trifluoro-1-ethanol, 1 equiv.) and trifluoromethanesulfonic anhydride (1.2 equiv.) were stirred for 3 hours under neat reflux (80 °C) conditions. After cooling to room temperature, the reflux condenser was removed and a fractional distillation condenser was attached. The temperature was slowly raised to obtain CF₃CH₂Otf (2,2,2-trifluoroethyl triflate) by fractional distillation.

Indene (1 equiv.) was added to THF (0.3 M) under Ar₂. After cooling to -25 °C, n-BuLi (2.5M, 1 equiv.) was slowly added dropwise. The mixture was stirred for 3 hours at room temperature, cooled to -25 °C, and then the previously obtained CF₃CH₂Otf (2,2,2-trifluoroethyl triflate, 1.1 equiv.) was added. After stirring overnight at room temperature, H₂O was added and the mixture was transferred to a separatory funnel for work up. The organic layer was dried with MgSO₄ and filtered. This was dried to synthesize 3-CF₃CH₂-Indene.

The obtained 3-CF₃CH₂-Indene (1 equiv.) was added to THF (0.3 M) under Ar₂. After cooling to -25 °C, n-BuLi (2.5M, 1 equiv.) was slowly added dropwise. The mixture was stirred for 3 hours at room temperature, cooled to -25 °C, and then TMCpZrCl₃(tetramethylcyclopentadienyl zirconium trichloride, 1 equiv.) was added. After stirring overnight at room temperature, all the solvent was dried off. DCM was added, and the filtrate was obtained through filtering, and this filtrate was dried to obtain an intermediate.

In a glove box, the dried intermediate was dissolved in DCM (0.3 M) and added to a high-pressure bomb reactor along with Pd/C (10 wt% Pd, 10 mol%), and then the reactor was taken out of the glove box. Thereafter, H₂ gas was charged to 10 barg and the mixture was stirred overnight at 40 °C. The residual H₂ gas was vented, and the filtrate was filtered and dried. Thereafter, hexane was added and the mixture was stirred for 3 hours at room temperature. Then, it was filtered to dry the solid to obtain the transition metal compound of Cat 3-7.

¹H NMR(500 MHz, CDCl₃, 7.26 ppm): 1.57-1.62(1H, m), 1.64-1.69(1H, m), 1.77-1.81(1H, m), 1.87-1.92(1H, m), 2.02(6H, s), 2.03(6H, s), 2.49-2.57(2H, m), 2.71-2.82(2H, m), 2.97-3.06(1H, m), 3.18-3.28(1H, m), 5.63(1H, d), 5.86(1H, s), 6.01(1H, d)

### Synthesis Example 3-8

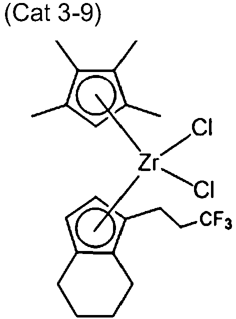

The transition metal compound of Cat 3-8 was obtained in the same manner as in Synthesis Example 3-7, except that CF₃CH₂CH₂OH ((3,3,3-trifluoro-1-propanol) was used instead of CF₃CH₂OH in Synthesis Example 3-7.

¹H NMR(500 MHz, CDCl₃, 7.26 ppm): 1.25-1.33(2H, m), 1.53-1.67(2H, m), 1.83-1.99(2H, m), 2.03(6H, s), 2.04(6H, s), 2.33-2.39(1H, m), 2.42-2.48(2H, m), 2.71-2.81(3H, m), 5.28(1H, d), 5.66(1H, s), 5.59(1H, d)

### Synthesis Example 3-9

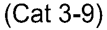

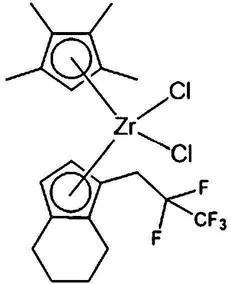

The transition metal compound of Cat 3-9 was obtained in the same manner as in Synthesis Example 3-7, except that C₂F₅CH₂OH (2,2,3,3,3-Pentafluoro-1-propanol) was used instead of CF₃CH₂OH in Synthesis Example 3-7.

¹H NMR(500 MHz, CDCl₃, 7.26 ppm): 1.57-1.71(2H, m), 1.77-1.92(2H, m), 2.02(6H, s), 2.03(6H, s), 2.47-2.60(2H, m), 2.70-2.81(2H, m), 2.95-3.05(1H, m), 3.17-3.28(1H, m), 5.66(1H, d), 5.86(1H, s), 6.02(1H, d)

### Synthesis Example 3-10

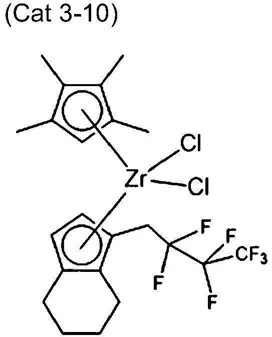

The transition metal compound of Cat 3-10 was obtained in the same manner as in Synthesis Example 3-7, except that C₃F₇CH₂OH (2,2,3,3,4,4,4-Heptafluoro-1-butanol) was used instead of CF₃CH₂OH in Synthesis Example 3-7.

¹H NMR(500 MHz, CDCl₃, 7.26 ppm): 1.56-1.70(2H, m), 1.76-1.92(2H, m), 2.02(6H, s), 2.04(6H, s), 2.45-2.59(2H, m), 2.70-2.82(2H, m), 2.92-3.04(1H, m), 3.17-3.28(1H, m), 5.68(1H, d), 5.86(1H, s), 6.01(1H, d)

### Synthesis Example 3-11

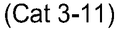

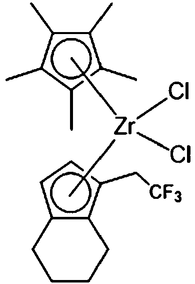

The transition metal compound of Cat 3-11 was obtained in the same manner as in Synthesis Example 3-7, except that PMCpZrCl₃(pentamethylcyclopentadienyl zirconium trichloride, 1 equiv.) was used instead of TMCpZrCl₃(tetramethylcyclopentadienyl zirconium trichloride, 1 equiv.) in Synthesis Example 3-7.

¹H NMR(500 MHz, CDCl₃, 7.26 ppm): 1.58-1.69(2H, m), 1.88-2.01(2H, m), 2.04(15H, s), 2.48-2.55(2H, m), 2.72-2.88(3H, m), 3.24-3.34(1H, m), 5.40(1H, d), 5.76(1H, d)

### Synthesis Example 3-12

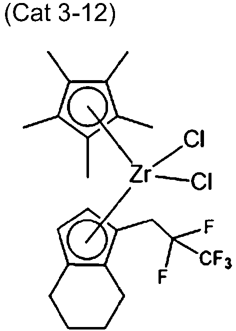

The transition metal compound of Cat 3-12 was obtained in the same manner as in Synthesis Example 3-9, except that PMCpZrCl₃(pentamethylcyclopentadienyl zirconium trichloride, 1 equiv.) was used instead of TMCpZrCl₃(tetramethylcyclopentadienyl zirconium trichloride, 1 equiv.) in Synthesis Example 3-9.

¹H NMR(500 MHz, CDCl₃, 7.26 ppm): 1.55-1.67(2H, m), 1.84-1.99(2H, m), 2.02(15H, s), 2.44-2.53(2H, m), 2.67-2.91(3H, m), 3.21-3.31(1H, m), 5.39(1H, d), 5.75(1H, d)

### Synthesis Example 4-1

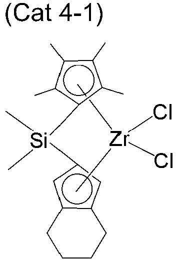

The transition metal compound of the structural formula Cat 4-1 was prepared in the same manner as in Preparation Example 4 of Korean Laid-Open Patent No. 10-2016-0084181.

### Synthesis Example 4-2

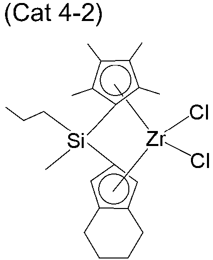

The transition metal compound of the structural formula Cat 4-2 was prepared in the same manner as in Preparation Example 5 of Korean Laid-Open Patent No. 10-2016-0084181.

### Synthesis Example 4-3

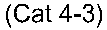

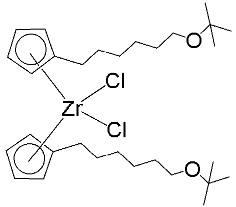

The transition metal compound of the structural formula Cat 4-3 was prepared in the same manner as in Preparation Example 1 of Korean Laid-Open Patent No. 10-2019-0074963.

### Synthesis Example 4-4

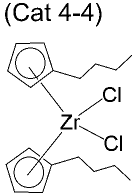

Product 447862 from Sigma Aldrich was purchased and used.

### Synthesis Example 4-5

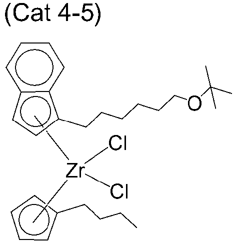

The transition metal compound of the structural formula Cat 4-5 was prepared in the same manner as in Preparation Example 3 of Korean Laid-Open Patent No. 10-2019-0074963.

### Synthesis Example 4-6

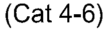

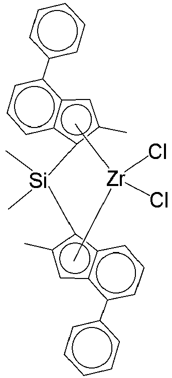

The transition metal compound of the structural formula Cat 4-6 was prepared in the same manner as in Chemical Formula 4 of Korean Laid-Open Patent No. 10-2015-0052803.

### Synthesis Example 4-7

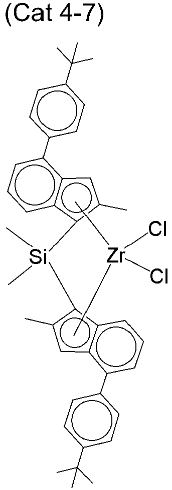

The transition metal compound of the structural formula Cat 4-7 was prepared in the same manner as in Organometallics (2006), 25(5), 1217-1229.

### <Preparation of hybrid supported metallocene catalyst>

### Preparation Example 1

2.0 kg of toluene and 1000 g of silica (Grace Davison, SP2410) were added to a 20L SUS high-pressure reactor, and stirred while raising the reactor temperature to 40 °C. 5.4 kg of methylaluminoxane (10 wt% in toluene, manufactured by Albemarle) was then added to the reactor, and the temperature was increased to 70 °C. The mixture was stirred at approximately 200 rpm for about 12 hours. Thereafter, the reactor temperature was lowered to 40°C, and stirring was stopped. Then, the reaction product was allowed to stand for about 10 minutes, followed by decantation. Subsequently, 2.0 kg of toluene was added to the reaction product, and the mixture was stirred for about 10 minutes. Stirring was then stopped, and the mixture was allowed to stand for approximately 30 minutes, followed by decantation.

2.0 kg of toluene was added to the reactor, and then the first transition metal compound of structural formula Cat 1-1 prepared in Synthesis Example 1-1, the second transition metal compound of structural formula Cat 3-1 prepared in Synthesis Example 3-1, and 1000 mL of toluene were added. The temperature of the reactor was raised to 85 °C, and the mixture was stirred for about 90 minutes. Thereafter, the reactor temperature was lowered to room temperature, stirring was stopped, and the reaction product was allowed to stand for about 30 minutes, followed by decantation. Subsequently, 3 kg of hexane was added to the reactor, and the hexane slurry solution was transferred to a 20L filter dryer. Then, the solution was filtered, and vacuum dried at 50°C for about 4 hours to obtain about 1.5 kg of the hybrid supported metallocene catalyst.

### Preparation Examples 2 to 24 and Comparative Preparation Examples 1 to 11

Hybrid supported metallocene catalysts were prepared in the same manner as in Preparation Example 1, except for changing the type and amount of the first and second transition metal compounds as shown in Table 1 below.

**[Table 1]**

| | First transition metal compound | | Second transition metal compound | |
|---|---|---|---|---|
| | Type | Amount used (mmol per gSiO₂) | Type | Amount used (mmol per gSiO₂) |
| Prep. Ex. 1 | Cat 1-1 | 40 | Cat 3-1 | 20 |
| Prep. Ex. 2 | Cat 1-1 | 40 | Cat 3-2 | 20 |
| Prep. Ex. 3 | Cat 1-1 | 40 | Cat 3-3 | 20 |
| Prep. Ex. 4 | Cat 1-1 | 40 | Cat 3-4 | 25 |
| Prep. Ex. 5 | Cat 1-1 | 40 | Cat 3-5 | 20 |
| Prep. Ex. 6 | Cat 1-1 | 40 | Cat 3-6 | 25 |
| Prep. Ex. 7 | Cat 1-1 | 40 | Cat 3-7 | 30 |
| Prep. Ex. 8 | Cat 1-1 | 40 | Cat 3-8 | 30 |
| Prep. Ex. 9 | Cat 1-1 | 40 | Cat 3-9 | 40 |
| Prep. Ex. 10 | Cat 1-1 | 40 | Cat 3-10 | 40 |
| Prep. Ex. 11 | Cat 1-1 | 40 | Cat 3-11 | 30 |
| Prep. Ex. 12 | Cat 1-1 | 40 | Cat 3-12 | 30 |
| Prep. Ex. 13 | Cat 1-2 | 20 | Cat 3-7 | 30 |
| Prep. Ex. 14 | Cat 1-3 | 20 | Cat 3-7 | 30 |
| Prep. Ex. 15 | Cat 1-4 | 40 | Cat 3-7 | 30 |
| Prep. Ex. 16 | Cat 1-5 | 40 | Cat 3-7 | 30 |
| Prep. Ex. 17 | Cat 1-6 | 40 | Cat 3-7 | 30 |
| Prep. Ex. 18 | Cat 1-7 | 20 | Cat 3-7 | 30 |
| Prep. Ex. 19 | Cat 1-8 | 20 | Cat 3-7 | 30 |
| Prep. Ex. 20 | Cat 1-9 | 20 | Cat 3-7 | 30 |
| Prep. Ex. 21 | Cat 2-1 | 30 | Cat 3-1 | 20 |
| Prep. Ex. 22 | Cat 2-2 | 30 | Cat 3-7 | 30 |
| Prep. Ex. 23 | Cat 2-1 | 30 | Cat 3-1 | 20 |
| Prep. Ex. 24 | Cat 2-2 | 30 | Cat 3-7 | 30 |
| Comp. Prep. Ex. 1 | Cat 2-1 | 30 | Cat 4-1 | 30 |
| Comp. Prep. Ex. 2 | Cat 2-1 | 30 | Cat 4-2 | 30 |
| Comp. Prep. Ex. 3 | Cat 2-1 | 30 | Cat 4-3 | 20 |
| Comp. Prep. Ex. 4 | Cat 2-1 | 30 | Cat 4-4 | 30 |
| Comp. Prep. Ex. 5 | Cat 2-1 | 30 | Cat 4-5 | 20 |
| Comp. Prep. Ex. 6 | Cat 2-2 | 30 | Cat 4-1 | 30 |
| Comp. Prep. Ex. 7 | Cat 2-2 | 30 | Cat 4-2 | 30 |
| Comp. Prep. Ex. 8 | Cat 2-2 | 30 | Cat 4-3 | 20 |
| Comp. Prep. Ex. 9 | Cat 2-2 | 30 | Cat 4-5 | 20 |
| Comp. Prep. Ex. 10 | Cat 4-6 | 40 | Cat 3-1 | 20 |
| Comp. Prep. Ex. 11 | Cat 4-7 | 40 | Cat 3-1 | 20 |

### <Production of Polyethylene>

### Examples 1 to 24 and Comparative Examples 1 to 11

A 140L continuous polymerization reactor capable of operating as an isobutene slurry loop process was prepared, with a reaction flow rate of about 7 m/s. Then, reactants required for polyethylene polymerization were continuously fed into the reactor as listed in Table 2. The catalyst used in each polymerization reaction was prepared according to Preparation Examples or Comparative Preparation Examples listed in Table 1, and was introduced into the reactor by premixing with the isobutene slurry. The polymerization reaction was performed at a pressure of about 40 bar and a temperature of about 85°C.

### Reference Example 1

Exceed^{™} 1018 product (ethylene/1-hexene copolymer) from ExxonMobil was purchased and used.

The main conditions of the polymerization reaction are shown in Table 2.

**[Table 2]**

| | Catalyst | Ethylene introducing amount (kg/hr) | 1-butene introducing amount¹ (wt%) | Hydrogen introducing amount² (ppm) | Activity (kgPE/kgSiO₂·hr) |
|---|---|---|---|---|---|
| Example 1 | Prep. Ex. 1 | 20.5 | 15.1 | 150 | 3.1 |
| Example 2 | Prep. Ex. 2 | 25 | 8.1 | 28 | 2.8 |
| Example 3 | Prep. Ex. 3 | 24.5 | 14.5 | 34 | 2.8 |
| Example 4 | Prep. Ex. 4 | 24.8 | 12.5 | 91 | 4.1 |
| Example 5 | Prep. Ex. 5 | 27.5 | 12.8 | 150 | 2.2 |
| Example 6 | Prep. Ex. 6 | 24.8 | 9.8 | 240 | 3.5 |
| Example 7 | Prep. Ex. 7 | 21.8 | 13.5 | 10 | 2.8 |
| Example 8 | Prep. Ex. 8 | 26 | 12.5 | 28 | 2.0 |
| Example 9 | Prep. Ex. 9 | 26.2 | 12.4 | 61 | 3.1 |
| Example 10 | Prep. Ex. 10 | 24 | 13.3 | 18 | 2.5 |
| Example 11 | Prep. Ex. 11 | 22 | 11.9 | 39 | 2.9 |
| Example 12 | Prep. Ex. 12 | 22.4 | 11.2 | 140 | 3.8 |
| Example 13 | Prep. Ex. 13 | 24 | 9.9 | 180 | 2.7 |
| Example 14 | Prep. Ex. 14 | 23.5 | 12 | 240 | 2.5 |
| Example 15 | Prep. Ex. 15 | 20.9 | 13.1 | 50 | 2.5 |
| Example 16 | Prep. Ex. 16 | 25 | 12.5 | 160 | 3.0 |
| Example 17 | Prep. Ex. 17 | 24 | 11.1 | 240 | 3.0 |
| Example 18 | Prep. Ex. 18 | 25 | 21 | 20 | 2.6 |
| Example 19 | Prep. Ex. 19 | 24 | 12.2 | 100 | 3.1 |
| Example 20 | Prep. Ex. 20 | 23.5 | 14.3 | 140 | 2.7 |
| Example 21 | Prep. Ex. 21 | 25 | 15.1 | 106 | 2.7 |
| Example 22 | Prep. Ex. 22 | 27.1 | 14.1 | 54 | 4.0 |
| Example 23 | Prep. Ex. 23 | 26.9 | 15.8 | 19 | 2.8 |
| Example 24 | Prep. Ex. 24 | 24.2 | 18.1 | 40 | 2.9 |
| Comp. Ex. 1 | Comp. Prep. Ex. 1 | 20.8 | 14.5 | 60 | 3.0 |
| Comp. Ex. 2 | Comp. Prep. Ex. 2 | 24 | 20.2 | 61 | 1.9 |
| Comp. Ex. 3 | Comp. Prep. Ex. 3 | 25.3 | 9.5 | 84 | 2.4 |
| Comp. Ex. 4 | Comp. Prep. Ex. 4 | 24 | 15.4 | 194 | 2.0 |
| Comp. Ex. 5 | Comp. Prep. Ex. 5 | 23.2 | 17.3 | 10 | 2.6 |
| Comp. Ex. 6 | Comp. Prep. Ex. 6 | 22.8 | 15.9 | 185 | 2.5 |
| Comp. Ex. 7 | Comp. Prep. Ex. 7 | 25.1 | 15.8 | 26 | 2.4 |
| Comp. Ex. 8 | Comp. Prep. Ex. 8 | 25.1 | 17.6 | 95 | 3.1 |
| Comp. Ex. 9 | Comp. Prep. Ex. 9 | 24.8 | 20 | 73 | 2.8 |
| Comp. Ex. 10 | Comp. Prep. Ex. 10 | 22.1 | 15.4 | 42 | 2.5 |
| Comp. Ex. 11 | Comp. Prep. Ex. 11 | 24.5 | 15.8 | 35 | 2.7 |

In Table 2, the activity (kgPE/kgSiO₂·hr) was calculated as the ratio of the weight of the produced polymer (kg PE) per weight of the supported catalyst used (kg) per unit time (hr).

In addition, the 1-butene introducing amount (wt%) was calculated as a percentage of the 1-butene introducing amount based on the total weight of monomers including ethylene and 1-butene, and the hydrogen introducing amount (ppm) was calculated based on the total weight of monomers including ethylene and 1-butene.

### <Experimental Example>

The physical properties of the polyethylene prepared in Examples and Comparative Examples were measured as follows, and the results are shown in Table 3 below.

### (1) density (g/cm³)

Measured in accordance with ASTM D1505.

### (2) Melt Index (MI_{2.16})

Measured in accordance with ISO 1133 (190 °C, 2.16kg load).

### (3) Dart drop impact strength (g)

The dart drop impact strength was measured according to the ASTM D1709 [Method A] for a 50 µm thick film prepared by the following method, and the average value was taken by measuring 20 or more times per film sample.

### <Preparation of film>

1500 ppm of an antioxidant (Songnox 1076 (Songwon):Songnox 1680(Songwon)=1:2 weight ratio) and 300 ppm of 3M Dynamar Polymer Processing Additive FX5929 were added to and mixed with the polyethylene prepared in Example or Comparative Example based on the total weight of polyethylene, and extruded at an extrusion temperature of 190 °C with an extrusion rate of 35kg/hr using a twin screw extruder (TEK 30 MHS, manufactured by SMPLATECH CO., diameter 32 phi, L/D=40) to prepare about 18 kg of a pellet-form composition for film formation.

The composition for film formation prepared above was inflation molded under the following film extrusion conditions to manufacture a film.

### <Film Forming Conditions>

Single screw extruder (Yujin Engineering Single Screw Extruder, Blown Film M/C, 50 phi, L/D=32)
Melting temperature (or extrusion temperature): 180 °C
Die Gap: 2.0 mm
Die diameter: 120 mm
Blown-Up Ratio: 2.5
Frost Line Height maintained at 200~250 mm
Sample extrusion rate: 300~500 g/min
Cooling: using a dual air-ring
Film thickness: 50 µm

### (4) processing pressure (bar)

The processing pressure (bar) was measured under the conditions of cylinder-1/-2/-3/die = 180/185/185/190 and 40 rpm using a Haake extruder.

### (5) haze (%)

The haze was measured according to the ISO 13468 for the film prepared in the dart drop impact strength measurement above.

**[Table 3]**

| | Density (g/cm³) | MI_{2.16} (g/10min) | Dart drop impact strength (g) | Processing pressure (bar) | Haze (%) |
|---|---|---|---|---|---|
| Example 1 | 0.9190 | 0.910 | 1020 | 244 | 14.0 |
| Example 2 | 0.9195 | 0.974 | 1200 | 240 | 12.4 |
| Example 3 | 0.9160 | 0.996 | 1150 | 245 | 11.5 |
| Example 4 | 0.9215 | 1.001 | 1050 | 260 | 10.4 |
| Example 5 | 0.9251 | 0.894 | 1210 | 280 | 13.8 |
| Example 6 | 0.9179 | 1.100 | 1300 | 310 | 10.5 |
| Example 7 | 0.9181 | 0.989 | 1080 | 321 | 10.2 |
| Example 8 | 0.9191 | 1.001 | 1290 | 280 | 13.5 |
| Example 9 | 0.9167 | 0.939 | 1300 | 296 | 16.4 |
| Example 10 | 0.9175 | 0.912 | 1200 | 320 | 9.8 |
| Example 11 | 0.9189 | 0.880 | 1090 | 290 | 12.4 |
| Example 12 | 0.9180 | 0.916 | 1300 | 242 | 13.1 |
| Example 13 | 0.9248 | 1.115 | 1310 | 280 | 13.5 |
| Example 14 | 0.9167 | 1.085 | 1200 | 280 | 8.9 |
| Example 15 | 0.9208 | 0.890 | 1220 | 250 | 15.7 |
| Example 16 | 0.9200 | 1.002 | 1090 | 251 | 12.4 |
| Example 17 | 0.9198 | 0.928 | 1110 | 312 | 18.5 |
| Example 18 | 0.9194 | 0.876 | 1310 | 240 | 18.5 |
| Example 19 | 0.9178 | 0.912 | 1220 | 245 | 11.5 |
| Example 20 | 0.9169 | 1.084 | 1010 | 240 | 12.4 |
| Example 21 | 0.9191 | 1.152 | 1200 | 291 | 17.4 |
| Example 22 | 0.9184 | 0.987 | 1130 | 244 | 14.0 |
| Example 23 | 0.9241 | 1.108 | 1140 | 260 | 10.4 |
| Example 24 | 0.9180 | 0.984 | 1040 | 280 | 14.1 |
| Comp. Ex. 1 | 0.9174 | 1.110 | 550 | 360 | 15.1 |
| Comp. Ex. 2 | 0.9168 | 0.899 | 450 | 348 | 13.5 |
| Comp. Ex. 3 | 0.9210 | 1.064 | 380 | 410 | 18.4 |
| Comp. Ex. 4 | 0.9167 | 0.920 | 640 | 370 | 17.5 |
| Comp. Ex. 5 | 0.9241 | 1.211 | 480 | 340 | 18.1 |
| Comp. Ex. 6 | 0.9230 | 1.145 | 640 | 330 | 16.1 |
| Comp. Ex. 7 | 0.9184 | 0.894 | 460 | 370 | 14.5 |
| Comp. Ex. 8 | 0.9199 | 1.104 | 460 | 340 | 16.4 |
| Comp. Ex. 9 | 0.9210 | 0.911 | 570 | 320 | 15.1 |
| Comp. Ex. 10 | 0.9180 | 1.010 | 250 | 350 | 20.8 |
| Comp. Ex. 11 | 0.9182 | 0.992 | 280 | 340 | 19.6 |
| Ref. Ex. 1 | 0.9180 | 1.006 | 1150 | 276 | 16.7 |

As can be confirmed from Table 3, the polyethylene of Examples manufactured using the hybrid supported metallocene catalyst including the first transition metal compound represented by Chemical Formula 1 or Chemical Formula 2 and the second transition metal compound represented by Chemical Formula 3 according to the present invention exhibited very high dart drop impact strength due to the combination of the high molecular weight and high copolymerization characteristics expressed from the first transition metal compound and the low molecular weight and high copolymerization characteristics expressed from the second transition metal compound, while having low processing pressure with excellent processability and transparency.

In addition, the polyethylene of Examples is an ethylene/1-butene copolymer manufactured using a relatively inexpensive 1-butene comonomer, but it can achieve density, dart drop impact strength, processability, and transparency at a level equivalent to the general-purpose ethylene/1-hexene copolymer of Reference Example 1, thus also securing price competitiveness.

On the other hand, it was confirmed that the polyethylene of Comparative Examples manufactured using the hybrid supported metallocene catalyst including the transition metal compound of Comparative Preparation Examples exhibited a significantly lower dart drop impact strength than the polyethylene of Examples.

## Claims

1. A hybrid supported metallocene catalyst, comprising
a first transition metal compound represented by the following Chemical Formula 1 or Chemical Formula 2;
a second transition metal compound represented by the following Chemical Formula 3;
a cocatalyst; and
a support: 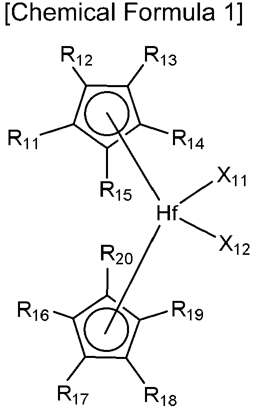 in Chemical Formula 1,
X₁₁ and X₁₂ are each independently C₁₋₂₀ alkyl, or halogen,
R₁₁ to R₁₅ are each independently hydrogen, C₁₋₂₀ alkyl, C₂₋₂₀ alkoxyalkyl, C₆₋₂₀ aryl, C₇₋₂₀ alkylaryl, or C₇₋₂₀ arylalkyl, or two adjacent substituents among R₁₁ to R₁₅ are linked to each other to form a C₆₋₂₀ aromatic ring which is substituted or unsubstituted, and
R₁₆ to R₂₀ are each independently hydrogen, C₁₋₂₀ alkyl, or C₂₋₂₀ alkoxyalkyl, 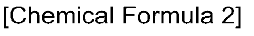 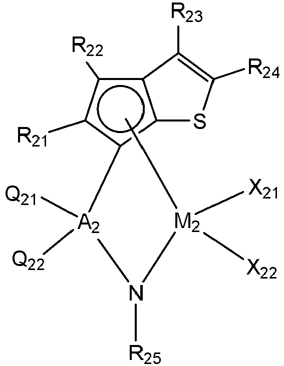 in Chemical Formula 2,
M₂ is a group 4 transition metal,
X₂₁ and X₂₂ are each independently, C₁₋₂₀ alkyl, or halogen,
A₂ is carbon, silicon, or germanium,
Q₂₁ and Q₂₂ are each independently, halogen, C₁₋₂₀ alkyl, or C₂₋₂₀ alkoxyalkyl, provided that at least one of Q₂₁ and Q₂₂ is C₂₋₂₀ alkoxyalkyl,
R₂₁ and R₂₂ are each independently, hydrogen or C₁₋₂₀ alkyl,
R₂₃ and R₂₄ are each independently, hydrogen, or C₁₋₂₀ alkyl, or are linked to each other to form a C₆₋₂₀ aromatic ring which is substituted or unsubstituted, and
R₂₅ is C₁₋₂₀ alkyl, 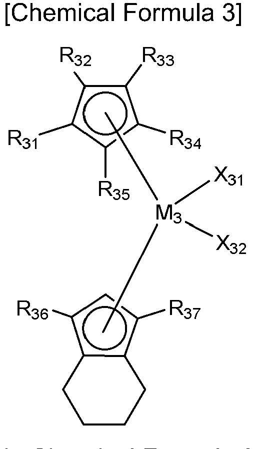 in Chemical Formula 3,
M₃ is a group 4 transition metal,
X₃₁ and X₃₂ are each independently, C₁₋₂₀ alkyl or halogen,
R₃₁ to R₃₅ are each independently, hydrogen, or C₁₋₂₀ alkyl, provided that at least four of R₃₁ to R₃₅ are C₁₋₂₀ alkyl, and
R₃₆ and R₃₇ are each independently, hydrogen, C₁₋₂₀ alkyl which is unsubstituted or substituted with one or more halogens, or C₂₋₂₀ alkoxyalkyl, provided that at least one of R₃₆ and R₃₇ is C₁₋₂₀ alkyl substituted with one or more halogens, or C₂₋₂₀ alkoxyalkyl.

2. The hybrid supported metallocene catalyst according to Claim 1,
wherein R₁₁ to R₁₅ are each independently hydrogen, C₁₋₆ alkyl, or an alkoxyalkyl of -(CH₂)ₙ-Rₐ (wherein Rₐ is a C₃₋₆ branched alkoxy group, and n is an integer of 2 to 10), or two adjacent substituents among R₁₁ to R₁₅ are linked to each other to form a benzene ring.

3. The hybrid supported metallocene catalyst according to Claim 1,
wherein R₁₆ to R₂₀ are each independently hydrogen, C₁₋₆ alkyl, or an alkoxyalkyl of -(CH₂)ₙ-Rₐ (wherein Rₐ is a C₃₋₆ branched alkoxy group, and n is an integer of 2 to 10).

4. The hybrid supported metallocene catalyst according to Claim 1,
wherein the compound represented by Chemical Formula 1 is any one selected from the group consisting of the following compounds:

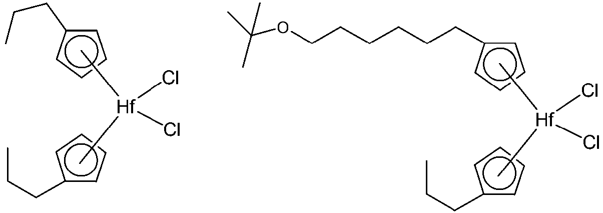

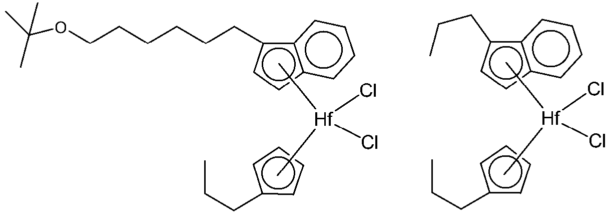

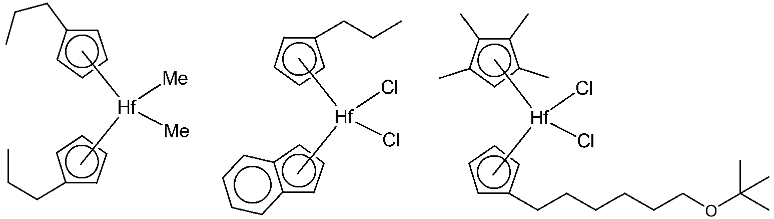

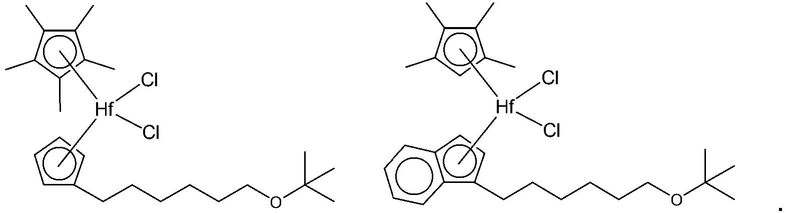

5. The hybrid supported metallocene catalyst according to Claim 1,
wherein M₂ is titanium (Ti), and
X₂₁ and X₂₂ are each independently C₁₋₆ alkyl.

6. The hybrid supported metallocene catalyst according to Claim 1,
wherein A₂ is silicon, and
at least one of Q₂₁ and Q₂₂ is an alkoxyalkyl of -(CH₂)ₙ-R_{b} (wherein R_{b} is a C₃₋₆ branched alkoxy group, and n is an integer of 2 to 10).

7. The hybrid supported metallocene catalyst according to Claim 1,
wherein R₂₁, R₂₂ and R₂₅ are each independently, C₁₋₆ alkyl, and
R₂₃ and R₂₄ are each independently, hydrogen, or C₁₋₆ alkyl, or are linked to each other to form a benzene ring.

8. The hybrid supported metallocene catalyst according to Claim 1,
wherein the compound represented by Chemical Formula 2 is any one selected from the group consisting of the following compounds:

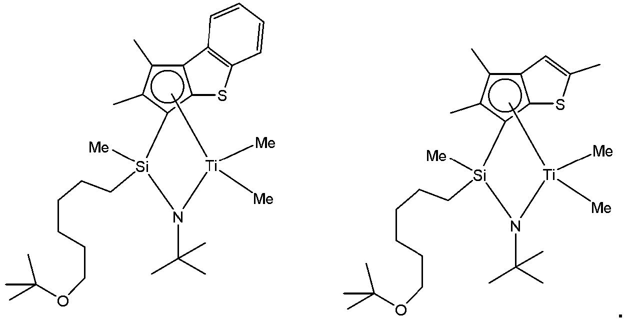

9. The hybrid supported metallocene catalyst according to Claim 1,
wherein M₃ is zirconium (Zr), and
X₃₁ and X₃₂ are each independently, halogen.

10. The hybrid supported metallocene catalyst according to Claim 1,
wherein at least four of R₃₁ to R₃₅ are methyl.

11. The hybrid supported metallocene catalyst according to Claim 1,
wherein one of R₃₆ and R₃₇ is hydrogen, or C₁₋₆ alkyl, and the other is C₁₋₆ alkyl which is unsubstituted or substituted with one or more halogens, or an alkoxyalkyl of - (CH₂)ₙ-R_{c} (wherein R_{c} is a C₃₋₆ branched alkoxy group, and n is an integer of 2 to 10).

12. The hybrid supported metallocene catalyst according to Claim 1,
wherein the compound represented by Chemical Formula 3 is any one selected from the group consisting of the following compounds:

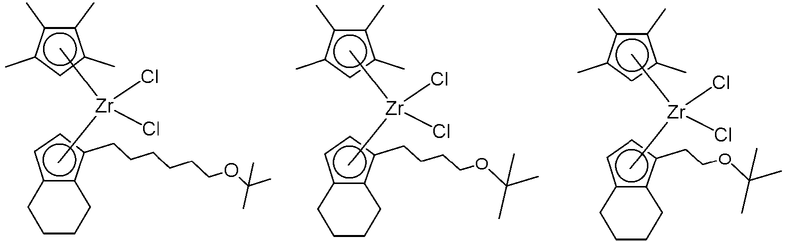

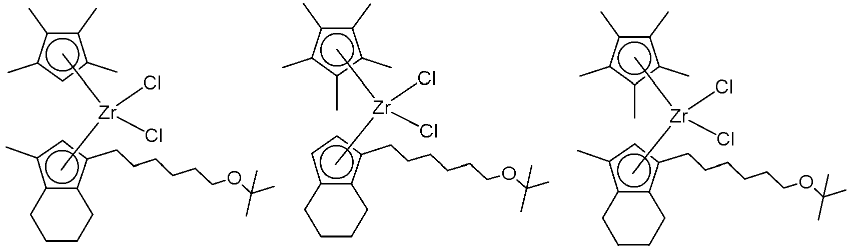

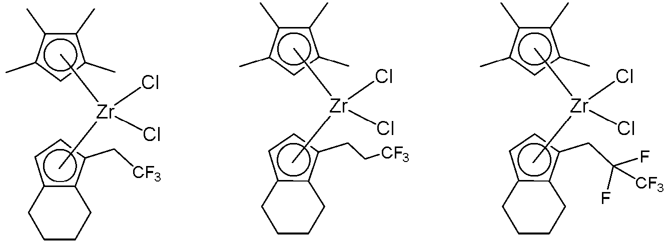

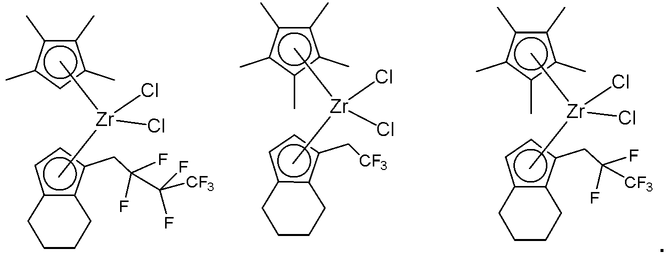

13. The hybrid supported metallocene catalyst according to Claim 1,
wherein the first transition metal compound and the second transition metal compound are included in a molar ratio of 1:10 to 10:1.

14. The hybrid supported metallocene catalyst according to Claim 1,
wherein the cocatalyst is at least one selected from the group consisting of compounds represented by the following Chemical Formula 4:
[Chemical Formula 4] -[Al(R₄₁)-O]a-
in Chemical Formula 4,
R₄₁ is a halogen; or a C₁₋₂₀ hydrocarbyl which is unsubstituted or substituted with halogen; and
a is an integer of 2 or more.

15. The hybrid supported metallocene catalyst according to Claim 1,
wherein the support comprises silica, alumina, magnesia, or a mixture thereof.

16. A method for preparing a polyethylene, comprising a step of polymerizing an ethylene monomer and an alpha-olefin based monomer in the presence of the hybrid supported metallocene catalyst according to claim 1, while introducing hydrogen.

17. The method for preparing a polyethylene according to Claim 16,
wherein the alpha-olefin based monomer is introduced at 5 to 20% by weight based on a total weight of monomers including the ethylene monomer and the alpha-olefin based monomer, and
the hydrogen is introduced at 5 to 500 ppm based on a total weight of monomers including the ethylene monomer and the alpha-olefin based monomer.

18. The method for preparing a polyethylene according to Claim 16,
wherein the alpha-olefin based monomer is 1-butene.
